# EUROPEAN PATENT SPECIFICATION

(11) **EP 4 133 877 B1**
(45) Date of publication and mention of the grant of the patent: **19.07.2023**
(21) Application number: 21717063.8
(22) Date of filing: 07.04.2021
(51) Int. Cl.: H04W 74/08, H04W 16/14

(54) **RANDOM ACCESS IN A WIRELESS COMMUNICATION NETWORK**
DIREKTZUGRIFF IN EINEM DRAHTLOSEN KOMMUNIKATIONSNETZWERK
ACCÈS ALÉATOIRE DANS UN RÉSEAU DE COMMUNICATION SANS FIL

(30) Priority: 07.04.2020 WO PCT/CN2020/083560
(43) Date of publication of application: 15.02.2023
(73) Proprietor: Telefonaktiebolaget LM ERICSSON (PUBL), 16483 Stockholm (SE)
(72) Inventor: WANG, Min, 977 53 LULEÅ (SE); CHRISTOFFERSSON, Jan, 975 61 LULEÅ (SE); HARRISON, Robert, Mark, GRAPEVINE, TX 76051 (US); LIN, Zhipeng, NANJING, Jiangsu 211100 (CN); RUNE, Johan, 181 29 LIDINGÖ (SE); ENBUSKE, Henrik, 113 41 Stockholm (SE)
(74) Representative: Ericsson
(86) International application number: PCT/EP2021/059012
(87) International publication number: WO 2021/204845

(56) References cited:
- ZTE CORPORATION ET AL: "LBT aspects of MSGA transmission", 3GPP DRAFT; R2-1914790, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20191118 - 20191122 7 November 2019 (2019-11-07), XP051815760, Retrieved from the Internet: URL:https://ftp.3gpp.org/tsg_ran/WG2_RL2/T SGR2_108/Docs/R2-1914790.zip R2-1914790_2-stepRACH_LBTaspects.docx [retrieved on 2019-11-07]
- ZTE: "FL Summary #4 of Channel Structure for 2-step RACH", 3GPP DRAFT; R1-1913540, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20191118 - 20191122 25 November 2019 (2019-11-25), XP051830820, Retrieved from the Internet: URL:https://ftp.3gpp.org/tsg_ran/WG1_RL1/T SGR1_99/Docs/R1-1913540.zip R1-1913540 FL Summary #4 of Channel Structure for 2-step RACH.docx [retrieved on 2019-11-25]
- ERICSSON: "Gapless msgA transmissions in NR-U", 3GPP DRAFT; R2-2001209, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic Meeting; 20200224 - 20200306 13 February 2020 (2020-02-13), XP051848777, Retrieved from the Internet: URL:https://ftp.3gpp.org/tsg_ran/WG2_RL2/T SGR2_109_e/Docs/R2-2001209.zip R2-2001209 - Gapless msgA transmissions in NR-U.docx [retrieved on 2020-02-13]

## Description

### TECHNICAL FIELD

The present application relates generally to a wireless communication network, and relates more particularly to random access in such a network.

### BACKGROUND

Random access in a wireless communication system involves a wireless device (e.g., a user equipment, UE) transmitting a random access preamble to a radio network node (e.g., a base station) over a random access channel. After transmitting the preamble, the wireless device in a so-called two-step random access procedure may proactively transmit a payload on a physical uplink shared channel (PUSCH), even before the wireless device receives a random access response from the radio network node in response to the preamble.

Some contexts complicate this 2-step random access procedure. For example, if the 2-step random access procedure is performed for random access to a link deployed in unlicensed frequency spectrum, a wireless device may need to perform a listen-before-talk (LBT) procedure both before the preamble transmission and before the payload transmission. However, if the gap in time between the preamble and the payload is less than a certain threshold (e.g., 16 us), the wireless device need only perform a single LBT procedure before the preamble transmission, i.e., without having to perform another LBT procedure before the payload transmission. This "gapless" message transmission approach, in which the gap in time between the preamble and the payload is less than the certain threshold, reduces random access latency by avoiding multiple LBT procedures. Problematically, though, different radio network nodes may differ in their support for gapless message transmission or in their configuration of resources on a link usable for gapless message transmission. Moreover, some wireless devices may differ in terms of how quickly they are able to transmit the payload after transmitting the preamble, e.g., lower-end devices may not have hardware as capable as higher-end devices for quick transition between signals with different power levels. Challenges exist therefore in exploiting 2-step random access with gapless message transmission in the face of differing device capabilities and network configurations.

3GPP document R2-1914790 "LBT aspects of MSGA transmission", ZTE Corporation et. al., 18 - 22 November 2019, Reno, USA, is about reduction of impact on the 2-step RAC procedure in case of NR-U. Design aspects of msgA for NR-U 2-step RACH are discussed and RACH formats that are suitable for MSGA without needing double LBT have been identified. The document indicates that in 2-step RACH in NR-U the number of LBT steps can be reduced if the US sends the PRACH part and the payload part of MsgA within one channel occupancy time. If the gap is less than 16 µs then there is no need for a further LBT step. If the gap is less than 25 µs but more than 16 µs, the UE may continue transmission provided that no energy was detected above a threshold.

3GPP document R1-1913540 "FL Summary #4 of Channel Structure for 2-step RACH", ZTE, 18 - 22 November 2019, Reno, USA, summarizes the key issues discussed under agenda 7.2.1.1 Channel Structure for Two-step RACH based on the views expressed in the contributions submitted to this agenda. In section 2.2.2 it is stated that for a UE in idle state, no more than two msgA PUSCH configurations are supported in an UL BWP.

3GPP document R2-2001209 "Gapless msgA transmissions in NR-U", Ericsson, Electronic Meeting 24th February - 6th March 2020, indicates that an important feature of the 2-step random access procedure is the ability to transmit msgA using only one LBT. With the current agreements for Rel-16 there are some configurations that will enable transmission of preamble and PUSCH with only one LBT. Since NR-U is one of the more important use cases for the 2-step RA procedure it is vital that the design enables a sufficient variety of configurations for different scenarios to ensure efficient 2-step operation for NR-U. In this contribution some additional agreements have been discussed which would be necessary to ensure good performance for the 2-step RA in NR-U.

### SUMMARY

The objective of the invention is achieved by means of the features of the appended independent claims.

According to some embodiments herein, a radio network node transmits signaling indicating whether or not gapless message transmission is configured for random access on a link. A wireless device can then perform random access on the link based on this signaling, e.g., including determining whether or not to use gapless message transmission. This way, the wireless device may use gapless message transmission for random access on the link if the link is configured for gapless message transmission and if the wireless device itself is capable of gapless message transmission. Alternatively, the wireless device can perform link selection based on the received signaling, e.g., to select a link in dependence on whether gapless message transmission is configured for random access on the link.

More particularly, embodiments herein include a method performed by a wireless device. The method comprises determining that no resources configured for random access on a link support a minimum gap requirement of the wireless device. This minimum gap requirement is a minimum gap required in time between an end of a transmission of a random access preamble and a start of a transmission of a payload. The method further comprises, based on said determining, transmitting a random access preamble using the resources configured for random access on the link, but waiting to transmit a payload until the wireless device receives a random access response in response to the random access preamble. Alternatively, the method further comprises, based on said determining, delaying random access on the link until resources configured for random access on the link support the minimum gap requirement of the wireless device. Alternatively, the method further comprises, based on said determining, selecting to perform random access on a different link.

In some embodiments, said transmitting, delaying, or selecting comprises transmitting a random access preamble using the resources configured for random access on the link, but waiting to transmit a payload until the wireless device receives a random access response in response to the random access preamble. In one or more of these embodiments, waiting to transmit a payload until the wireless device receives a random access response in response to the random access preamble comprises discarding a payload prepared for transmission as part of a 2-step random access procedure. Alternatively or additionally, said determining comprises determining that no resources configured for random access on the link support a minimum gap requirement needed for the wireless device to perform a 2-step random access procedure. In this case, said transmitting comprises transmitting, based on said determining, a 4-step random access preamble.

In one or more embodiments, the method further comprises selecting a random access preamble resource in which to transmit a random access preamble, irrespective of whether the random access preamble resource is configured for a 2-step random access preamble or a 4-step random access preamble. In this case, said determining is performed after selecting a random access preamble resource configured for a 2-step random access preamble.

In other embodiments, the method further comprises selecting a random access preamble resource configured for a 2-step random access preamble, wherein said determining is performed after said selecting.

In still other embodiments, the transmitted random access preamble is a 2-step random access preamble and the random access response is a fallback random access response. In one or more of these embodiments, the method further comprises selecting to perform a 4-step random access procedure for random access on the link, and after selecting to perform the 4-step random access procedure, determining that no resources are configured on the link for a 4-step random access procedure. The method in this case also comprises selecting to transmit a 2-step random access preamble based on said determining that no resources are configured on the link for a 4-step random access procedure, and after selecting to transmit a 2-step random access preamble, determining whether resources configured for random access on the link support the minimum gap requirement of the wireless device.

In some embodiments, said determining that no resources configured for random access on the link support the minimum gap requirement of the wireless device comprises, for each combination of a random access preamble resource and a payload resource configured for random access on the link, determining that a gap in time between an end of the random access preamble resource and a start of the payload resource is less than the minimum gap requirement of the wireless device.

In one or more embodiments, said transmitting, delaying, or selecting comprises said delaying or said selecting.

In some embodiments, the link is a cell or a bandwidth part of a cell, and the link is deployed on an unlicensed frequency carrier.

Other embodiments herein include a method performed by a wireless device. The method comprises determining whether and/or which resources configured for random access on a link support a minimum gap requirement of the wireless device and/or a maximum gap requirement for gapless message transmission. In this case, the minimum gap requirement is a minimum gap required in time between an end of a transmission of a random access preamble and a start of a transmission of a payload, and according to the maximum gap requirement a gap in time, if any, between an end of a transmission of a random access preamble and a start of a transmission of a payload must be less than or equal to a maximum gap threshold. The method also comprises based on said determining, deciding whether and/or how to perform random access on the link. The method also comprises performing or not performing random access on the link according to said deciding.

In some embodiments, said deciding comprises selecting which resources to use for performing random access on the link, and said performing comprises performing random access on the link using the selected resources.

In some embodiments, said deciding comprises selecting which random access preamble to use for performing random access on the link, and said performing comprises transmitting the selecting random access preamble.

In some embodiments, said deciding comprises deciding whether and/or how to use gapless message transmission for random access on the link, and said performing or not performing comprises using or not using gapless message transmission for random access on the link according to said deciding.

In some embodiments, said deciding comprises deciding whether to use a 2-step procedure or a 4-step procedure for random access on the link, and said performing or not performing comprises using the 2-step procedure or the 4-step procedure for random access on the link according to said deciding.

In some embodiments, the link is a cell or a bandwidth part of a cell, and the link is deployed on an unlicensed frequency carrier.

Other embodiments herein include a wireless device configured to determine that no resources configured for random access on a link support a minimum gap requirement of the wireless device. In this case, the minimum gap requirement is a minimum gap required in time between an end of a transmission of a random access preamble and a start of a transmission of a payload. The wireless device is also configured to, based on determining that no resources configured for random access on the link support the minimum gap requirement of the wireless device, transmit a random access preamble using the resources configured for random access on the link, but waiting to transmit a payload until the wireless device receives a random access response in response to the random access preamble. Alternatively, the wireless device is also configured to, based on determining that no resources configured for random access on the link support the minimum gap requirement of the wireless device, delay random access on the link until resources configured for random access on the link support the minimum gap requirement of the wireless device. Alternatively, the wireless device is also configured to, based on determining that no resources configured for random access on the link support the minimum gap requirement of the wireless device, select to perform random access on a different link.

In some embodiments, the wireless device is configured to perform the steps described above for a wireless device.

Other embodiments herein include a wireless device configured to make a determination as to whether and/or which resources configured for random access on a link support a minimum gap requirement of the wireless device and/or a maximum gap requirement for gapless message transmission. In this case, the minimum gap requirement is a minimum gap required in time between an end of a transmission of a random access preamble and a start of a transmission of a payload, and according to the maximum gap requirement a gap in time, if any, between an end of a transmission of a random access preamble and a start of a transmission of a payload must be less than or equal to a maximum gap threshold. The wireless device is also configured to, based on the determination, make a decision as to whether and/or how to perform random access on the link. The wireless device is also configured to perform or not perform random access on the link according to the decision.

In some embodiments, the wireless device is configured to perform the steps described above for a wireless device.

Other embodiments herein include a computer program comprising instructions which, when executed by at least one processor of a wireless device, causes the wireless device to perform the steps described above for a wireless device.

In some embodiments, a carrier containing the computer program described above is one of an electronic signal, optical signal, radio signal, or computer readable storage medium.

Other embodiments herein include a wireless device comprising communication circuitry and processing circuitry. The processing circuitry is configured to determine that no resources configured for random access on a link support a minimum gap requirement of the wireless device. In this case, the minimum gap requirement is a minimum gap required in time between an end of a transmission of a random access preamble and a start of a transmission of a payload. The processing circuitry is configured to, based on determining that no resources configured for random access on the link support the minimum gap requirement of the wireless device, transmit a random access preamble using the resources configured for random access on the link, but waiting to transmit a payload until the wireless device receives a random access response in response to the random access preamble. Alternatively, the processing circuitry is configured to, based on determining that no resources configured for random access on the link support the minimum gap requirement of the wireless device, delay random access on the link until resources configured for random access on the link support the minimum gap requirement of the wireless device. Alternatively, the processing circuitry is configured to, based on determining that no resources configured for random access on the link support the minimum gap requirement of the wireless device, select to perform random access on a different link.

In some embodiments, the processing circuitry configured to perform the steps described above for a wireless device.

Other embodiments herein include a wireless device comprising communication circuitry and processing circuitry. The processing circuitry is configured to make a determination as to whether and/or which resources configured for random access on a link support a minimum gap requirement of the wireless device and/or a maximum gap requirement for gapless message transmission. In this case, the minimum gap requirement is a minimum gap required in time between an end of a transmission of a random access preamble and a start of a transmission of a payload, and according to the maximum gap requirement a gap in time, if any, between an end of a transmission of a random access preamble and a start of a transmission of a payload must be less than or equal to a maximum gap threshold. The processing circuitry is also configured to, based on the determination, make a decision as to whether and/or how to perform random access on the link. The processing circuitry is also configured to perform or not perform random access on the link according to the decision.

In some embodiments, the processing circuitry configured to perform the steps described above for a wireless device.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a wireless communication network according to some embodiments.
Figure 2 is a block diagram of a wireless communication network according to other embodiments.
Figure 3 is a block diagram of a wireless communication network according to still other embodiments.
Figure 4A is a method performed by a wireless device according to some embodiments.
Figure 4B is a method performed by a radio network node according to some embodiments.
Figure 5A is a method performed by a wireless device according to other embodiments.
Figure 5B is a method performed by a radio network node according to other embodiments.
Figure 6 is a method performed by a wireless device according to still other embodiments.
Figure 7 is a method performed by a wireless device according to yet other embodiments.
Figure 8 is a method performed by a radio network node according to still other embodiments.
Figure 9 is a block diagram of a wireless device according to some embodiments.
Figure 10 is a block diagram of a radio network node according to some embodiments.
Figure 11 is a call flow diagram of a 4-step random access procedure.
Figure 12 is a call flow diagram of a 2-step random access procedure.
Figure 13A is a call flow diagram of preamble assignment for a contention-free 4-step random access procedure.
Figure 13B is a call flow diagram of preamble assignment for a contention-free 2-step random access procedure.
Figure 14 is a block diagram of RACH occasion and PUSCH occasion resource configuration according to some embodiments.

### DETAILED DESCRIPTION

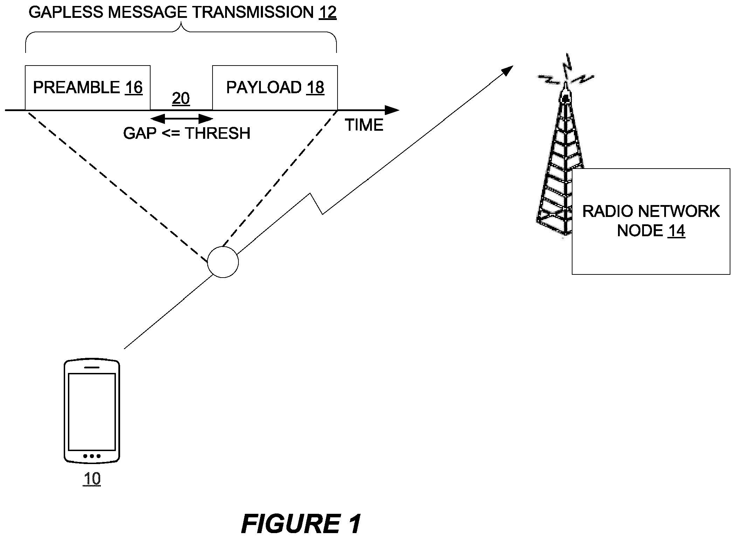

Figure 1 shows a wireless device 10 performing gapless message transmission 12 for random access to a link (e.g., a cell or bandwidth part, BWP) provided by a radio network node 14 according to some embodiments. The gapless message transmission 12 may for instance be performed as part of a 2-step random access procedure, e.g., in which case the gapless message transmission 12 may be referred to as gapless msgA transmission. The wireless device 10 according to the gapless message transmission 12 transmits a random access preamble 16, e.g., in a random access preamble resource. The wireless device 10 also transmits a payload 18, e.g., on a Physical Uplink Shared Channel (PUSCH), such as a Radio Resource Control (RRC) session establishment or resume request. The gapless message transmission 12 is gapless in the sense that any gap 20 in time between an end of the random access preamble 16 and a start of the payload 18 is less than or equal to a maximum gap threshold, e.g., 16us. In this regard, if there is a non-zero gap in time between the preamble 16 and the payload 18, the gap 20 being less than the maximum gap threshold may mean that the transmission 12 can be treated as if there was no gap between the preamble 16 and the payload 18. That is, a transmission 12 with a non-zero gap less than the maximum gap threshold is still effectively deemed or treated as a transmission without any gap, i.e., a gapless message transmission. The maximum gap threshold may also be referred to as a maximum gap requirement since it is the maximum gap permitted in time for the transmission to be considered a gapless message transmission.

Where the gapless message transmission 12 is performed on a link deployed in unlicensed frequency spectrum, for instance, the transmission 12 being effectively gapless in nature may mean that the wireless device 10 need only perform a single listen-before-talk (LBT) procedure before transmitting the preamble 16, and need not perform another LBT procedure before transmitting the payload 18. This is because the preamble transmission is considered to still control the channel if the wireless device 10 occupies the channel again with the payload transmission before expiry of the maximum gap threshold.

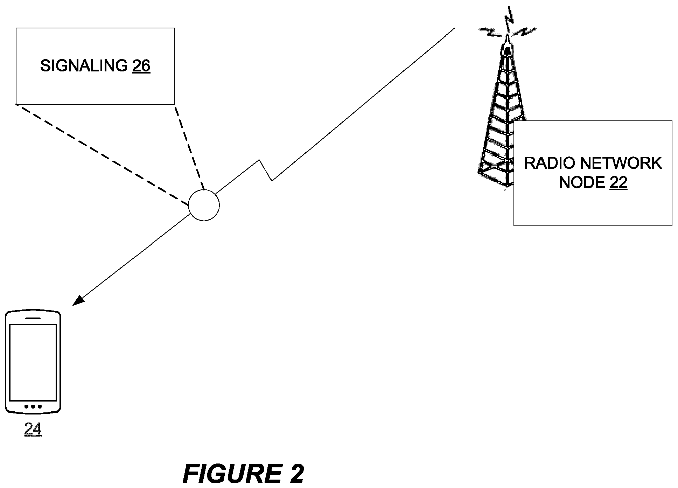

In this context, Figure 2 shows a radio network node 22 according to some embodiments is configured to transmit signaling 26 (e.g., broadcasted system information) to a wireless device 24. The signaling 26 indicates whether or not gapless message transmission 12 is configured for random access on a link. As explained above, according to gapless message transmission 12 a gap 20 in time, if any, between an end of a transmission of a random access preamble 16 and a start of a transmission of a payload 18 is less than or equal to a maximum gap threshold. The wireless device 24 correspondingly receives this signaling 26. In some embodiments, the wireless device 24 performs random access on the link based on this signaling 26. For example, the wireless device may determine, based at least in part on the received signaling 26, whether or not to use gapless message transmission 12 for random access on the link. This determination may also be based on whether or not the wireless device 24 is capable of gapless message transmission 12 for random access, e.g., where the device's capability may depend on whether its hardware or other capability supports being able to transition from transmitting the preamble 16 to transmitting the payload 18 in less time than the maximum gap threshold.

In some embodiments, for example, the wireless device 24 is configured to use gapless message transmission 20 for random access on the link if the signaling 26 indicates that gapless message transmission 20 is configured for random access on the link and the wireless device 24 is capable of gapless message transmission 20 for random access. But, the wireless device 24 is configured to not use gapless message transmission 20 for random access on the link if the signaling 26 indicates that gapless message transmission 20 is not configured for random access on the link or the wireless device 24 is not capable of gapless message transmission 20 for random access. If the wireless device 24 does not use gapless message transmission 20, for instance, the wireless device 24 may wait to transmit a payload (e.g., RRC establishment request) until after receiving a random access response in response to the preamble 16. That is, the wireless device 24 may receive a random access response in response to the preamble, and only then transmit a payload after receiving the response.

In other embodiments, the wireless device 24 determines, based on the received signaling 24, whether to perform random access on the link. This may be performed as part of link selection, for instance. In one such embodiment, the wireless device selects, from one or more candidate links, a link on which to perform random access, according to link selection criteria that favors links in the following order: (1) a link with the best downlink signal measurement and on which gapless message transmission is configured for random access; (2) a link on which gapless message transmission is not configured for random access but which has the best downlink signal measurement and is configured for a 2-step random access procedure; and (3) a link on which gapless message transmission is not configured for random access and which is not configured for a 2-step random access procedure, but which has the best downlink signal measurement. In other embodiments, the wireless device 24 may determine, based on the signaling 26, how or whether to offset a signal measurement on the link, and then decide whether or not to perform random access on the link based on the potentially offset signal measurement.

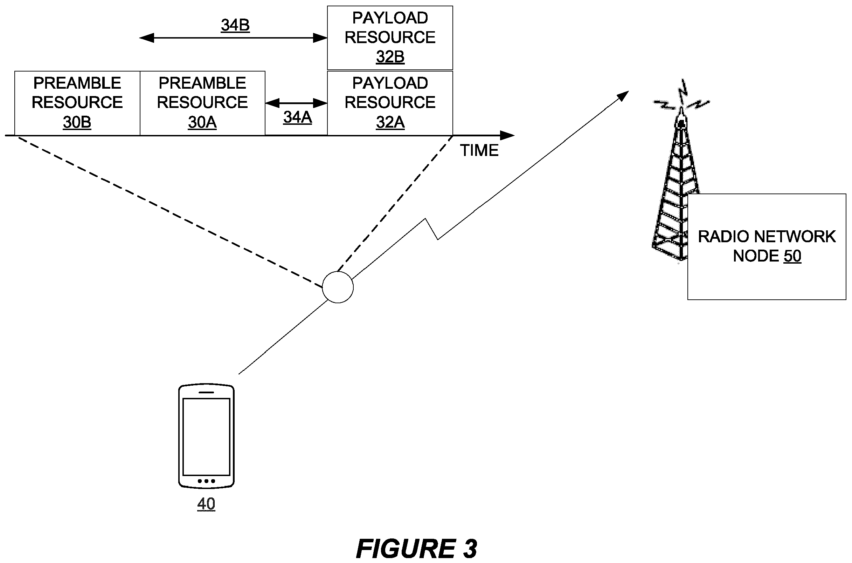

Figure 3 illustrates additional or alternative embodiments herein. As shown, resources are configured for random access on a link served by radio network node 50. The resources shown include for example preamble resources 30A and 30B for transmission of a random access preamble, and payload resources 32A and 32B for transmission of a payload. The resources may be paired in the sense that selection of preamble resource 30A for transmission of the random access preamble requires selection of payload resource 32A for transmission of the payload. And selection of preamble resource 30B for transmission of the random access preamble requires selection of payload resource 32B for transmission of the payload.

In this context, according to some embodiments, a wireless device 40 determines whether and/or which resources (e.g., resources 30A, 30B, 32A, 32B, etc.) configured for random access on the link support a minimum gap requirement of the wireless device 40 and/or a maximum gap requirement for gapless message transmission 20. Determining whether and/or which resources support the maximum gap requirement may for instance involve determining whether and/or which pair(s) or resources are separated in time by a gap that is less than or equal to the maximum gap requirement for gapless message transmission 20. As shown, for instance, this may involve determining whether the gap 34A between preamble resource 30A and payload resource 32A is less than or equal to the maximum gap requirement, and/or determining whether the gap 34B between preamble resource 30B and payload resource 32B is less than or equal to the maximum gap requirement. On the other hand, the minimum gap requirement of the wireless device 40 may reflect a hardware limitation or other limitation of the wireless device 40 which prevents the wireless device 40 from transmitting the payload too quickly after transmitting the preamble. Accordingly, determining whether and/or which resources support the minimum gap requirement may for instance involve determining whether and/or which pair(s) or resources are separated in time by a gap that is greater than or equal to the minimum gap requirement. As shown, for instance, this may involve determining whether the gap 34A between preamble resource 30A and payload resource 32A is greater than or equal to the minimum gap requirement, and/or determining whether the gap 34B between preamble resource 30B and payload resource 32B is greater than or equal to the minimum gap requirement.

In some embodiments, the wireless device 40, based on this determination, decides whether and/or how to perform random access on the link. The wireless device 40 may then perform or not perform random access on the link according to that decision. For example, the wireless device 40 may select which resources to use for performing random access on the link, may select which random access preamble to use for performing random access on the link (e.g., a 2-step random access preamble or a 4-step random access preamble), may decide whether and/or how to use gapless message transmission 20 for random access on the link, and/or may decide whether to use a 2-step procedure or a 4-step procedure for random access on the link.

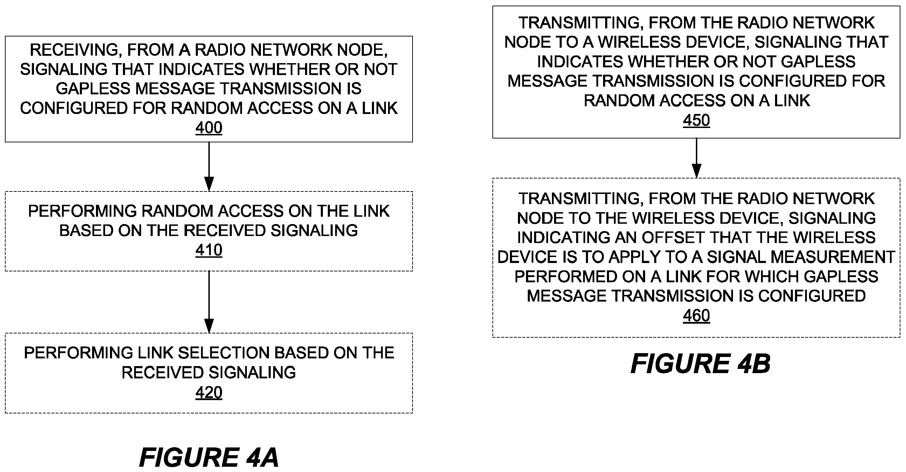

In view of the modifications and variations herein, Figure 4A shows a method performed by a wireless device 24. The method comprises receiving, from a radio network node 22, signaling 26 that indicates whether or not gapless message transmission 12 is configured for random access on a link (Block 400). Here, according to gapless message transmission 12 a gap 20 in time, if any, between an end of a transmission of a random access preamble 16 and a start of a transmission of a payload 18 is less than or equal to a maximum gap threshold.

In some embodiments, the method also comprises performing random access on the link based on the received signaling 26 (Block 410). This performing may, for example, comprise determining, based at least in part on the received signaling 26, whether or not to use gapless message transmission 12 for random access on the link. In one or more embodiments, such determining is also based on whether or not the wireless device 24 is capable of gapless message transmission 12 for random access. In this case, performing random access may comprise using gapless message transmission 12 for random access on the link if the signaling 26 indicates that gapless message transmission 12 is configured for random access on the link and the wireless device 24 is capable of gapless message transmission 12 for random access. Or, performing random access may instead comprise not using gapless message transmission 12 for random access on the link if the signaling 26 indicates that gapless message transmission 12 is not configured for random access on the link or the wireless device 24 is not capable of gapless message transmission 12 for random access.

In other embodiments, performing random access comprises, based on the signaling 26 indicating that gapless message transmission 12 is not configured for random access on the link or based on the wireless device 24 not being capable of gapless message transmission 12 for random access: (i) transmitting a random access preamble for random access on the link; (ii) receiving a random access response in response to the transmitted random access preamble; and (iii) transmitting a payload after receiving the random access response. In one such embodiment, the transmitted random access preamble is specific for a 4-step random access procedure. In another embodiment, by contrast, the transmitted random access preamble is specific for a 2-step random access procedure.

In some embodiments, the method further comprises determining, based on the received signaling 26, whether to perform random access on the link.

In yet other embodiments, the method alternatively or additionally comprises performing link selection based on the received signaling 26 (Block 420). For example, performing link selection based on the received signaling 26 may comprise selecting, from one or more candidate links, a link on which to perform random access, according to link selection criteria that favors links in the following order: (i) a link with the best downlink signal measurement and on which gapless message transmission 12 is configured for random access; (ii) a link on which gapless message transmission 12 is not configured for random access but which has the best downlink signal measurement and is configured for a 2-step random access procedure; and (iii) a link on which gapless message transmission 12 is not configured for random access and which is not configured for a 2-step random access procedure, but which has the best downlink signal measurement.

In some embodiments, the method further comprises performing a signal measurement on the link. In this case, the method may also comprise, based on the received signaling, determining how or whether to offset the signal measurement. The method may then comprise, based on the signal measurement, as offset or not according to said determining, deciding whether or not to perform random access on the link. In one such embodiment, said determining is also based on at least one of any one or more of: a density of random access channel occasions on the link; a density of random access channel occasions configured for 2-step random access on the link; whether the link is configured with resources usable for both gapless message transmission and non-gapless message transmission; whether the link is configured for 4-step random access and/or 2-step random access; and whether the wireless device 24 is capable of gapless message transmission for random access. In one embodiment, the method further comprises receiving, from the radio network node 22, signaling indicating an offset to apply to a signal measurement performed on a link for which gapless message transmission 12 is configured.

In some embodiments, the link is a cell. In other embodiments, the link is a bandwidth part of a cell or a carrier. In any of the embodiments herein, the link may be deployed on an unlicensed frequency carrier.

In some embodiments, the method further comprises, based on the received signaling 26, performing random access on the link using gapless message transmission 12, including transmitting both a random access preamble 16 and a payload 18 based on the same clear channel assessment.

In some embodiments, the signaling 26 comprises broadcasted system information.

Figure 4B shows a corresponding method performed by a radio network node 22. The method comprises transmitting, from the radio network node 22 to a wireless device 24, signaling 26 that indicates whether or not gapless message transmission 12 is configured for random access on a link (Block 450). According to gapless message transmission 12 a gap 20 in time, if any, between an end of a transmission of a random access preamble 16 and a start of a transmission of a payload 18 is less than or equal to a maximum gap threshold.

In some embodiments, the method further comprises transmitting, from the radio network node 22 to the wireless device 24, signaling indicating an offset that the wireless device 24 is to apply to a signal measurement performed on a link for which gapless message transmission 12 is configured.

In some embodiments, the link is a cell. In other embodiments, the link is a bandwidth part of a cell or a carrier. In any of the embodiments herein, the link may be deployed on an unlicensed frequency carrier.

In some embodiments, the signaling 26 comprises broadcasted system information.

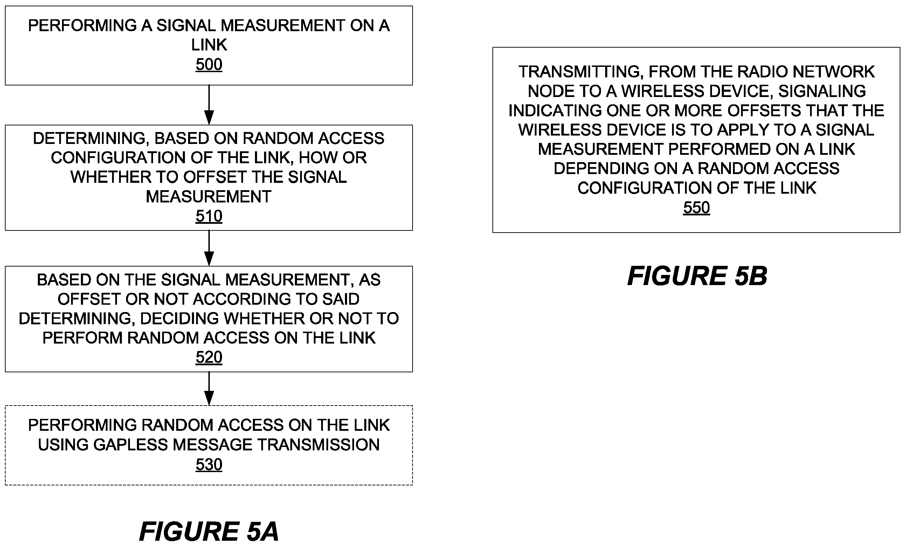

Figure 5A shows a method performed by a wireless device according to other embodiments. As shown, the method comprises performing a signal measurement on a link (Block 500). The method also comprises determining, based on random access configuration of the link, how or whether to offset the signal measurement (Block 510). The method further comprises, based on the signal measurement, as offset or not according to said determining, deciding whether or not to perform random access on the link.

In some embodiments, the random access configuration includes whether or not gapless message transmission 12 is configured for random access on the link.

In some embodiments, the random access configuration includes at least one of any one or more of: a density of random access channel occasions on the link; a density of random access channel occasions configured for 2-step random access on the link; whether the link is configured with resources usable for both gapless message transmission and non-gapless message transmission; and whether the link is configured for 4-step random access and/or 2-step random access.

In some embodiments, the link is a cell. In other embodiments, the link is a bandwidth part of a cell or a carrier. In any of the embodiments herein, the link may be deployed on an unlicensed frequency carrier.

In some embodiments, the method further comprises receiving, from a radio network node, signaling indicating one or more offsets to apply to the signal measurement according to said determining.

In some embodiments, the method further comprises performing random access on the link using gapless message transmission 12, including transmitting both a random access preamble 16 and a payload 18 based on the same clear channel assessment.

Figure 5B shows a corresponding method performed by a radio network node. The method comprises transmitting, from the radio network node to a wireless device, signaling indicating one or more offsets that the wireless device is to apply to a signal measurement performed on a link depending on a random access configuration of the link (Block 550).

In some embodiments, the random access configuration includes whether or not gapless message transmission 12 is configured for random access on the link.

In some embodiments, the random access configuration includes at least one of any one or more of: a density of random access channel occasions on the link; a density of random access channel occasions configured for 2-step random access on the link; whether the link is configured with resources usable for both gapless message transmission and non-gapless message transmission; and whether the link is configured for 4-step random access and/or 2-step random access.

In some embodiments, the link is a cell. In other embodiments, the link is a bandwidth part of a cell or a carrier. In any of the embodiments herein, the link may be deployed on an unlicensed frequency carrier.

Although not shown, a method performed by a wireless device in other embodiments herein may include receiving, from a radio network node, signaling indicating one or more offsets to apply to a signal measurement performed on a link depending on a random access configuration of the link. In some embodiments, the random access configuration includes whether or not gapless message transmission is configured for random access on the link. Alternatively or additionally, the random access configuration may include at least one of any one or more of: a density of random access channel occasions on the link; a density of random access channel occasions configured for 2-step random access on the link; whether the link is configured with resources usable for both gapless message transmission and non-gapless message transmission; and whether the link is configured for 4-step random access and/or 2-step random access.

In some embodiments, the link is a cell. In other embodiments, the link is a bandwidth part of a cell or a carrier. In any of the embodiments herein, the link may be deployed on an unlicensed frequency carrier.

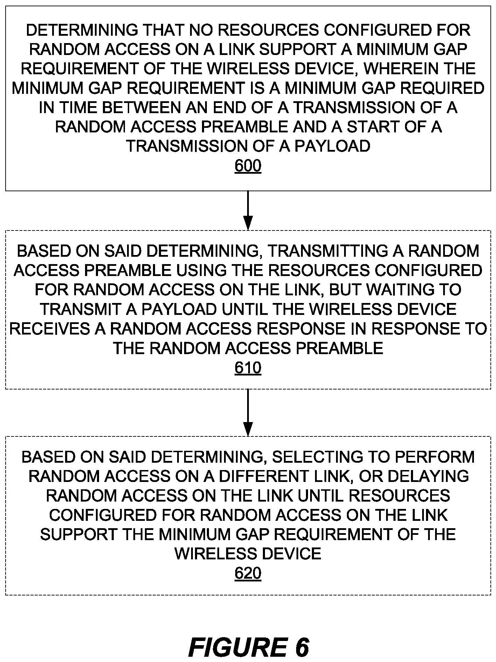

Figure 6 shows a method performed by a wireless device 40 according to still other embodiments. The method comprises determining that no resources configured for random access on a link support a minimum gap requirement of the wireless device 40 (Block 600). This minimum gap requirement is a minimum gap required in time between an end of a transmission of a random access preamble 16 and a start of a transmission of a payload 18.

In some embodiments, the method further comprises, based on said determining, transmitting a random access preamble 16 using the resources configured for random access on the link, but waiting to transmit a payload 18 until the wireless device 40 receives a random access response in response to the random access preamble 16 (Block 610). Alternatively, the method further comprises, based on said determining, selecting to perform random access on a different link, or delaying random access on the link until resources configured for random access on the link support the minimum gap requirement of the wireless device 40 (Block 620).

In one or more embodiments, the transmitted random access preamble 16 is a 4-step random access preamble. In one such embodiment, the method further comprises selecting a random access preamble resource configured for a 2-step random access preamble, wherein said determining (Block 600) is performed after said selecting (Block 620).

In still other embodiments, the transmitted random access preamble 16 is a 2-step random access preamble. In one such embodiment, the random access response is a fallback random access response. Regardless, in some embodiments, the method further comprises selecting to perform a 4-step random access procedure for random access on the link, and after selecting to perform the 4-step random access procedure, determining that no resources are configured on the link for a 4-step random access procedure. The method in this case also comprises selecting to transmit a 2-step random access preamble based on said determining that no resources are configured on the link for a 4-step random access procedure, and after selecting to transmit a 2-step random access preamble, determining whether resources configured for random access on the link support the minimum gap requirement of the wireless device 40.

In one or more embodiments, the method further comprises selecting a random access preamble resource in which to transmit a random access preamble 16, irrespective of whether the random access preamble resource is configured for a 2-step random access preamble or a 4-step random access preamble. In one such embodiment, said determining (Block 600) is performed after selecting a random access preamble resource configured for a 2-step random access preamble.

In other embodiments, the method further comprises selecting a random access preamble resource configured for a 2-step random access preamble, and said determining (Block 600) is performed after said selecting.

In some embodiments, determining that no resources configured for random access on the link support the minimum gap requirement of the wireless device 40 comprises, for each combination of a random access preamble resource and a payload 18 resource configured for random access on the link, determining that a gap in time between an end of the random access preamble resource and a start of the payload resource is less than the minimum gap requirement of the wireless device.

In one or more embodiments, waiting to transmit a payload 18 until the wireless device 40 receives a random access response in response to the random access preamble 16 comprises discarding a payload prepared for transmission as part of a 2-step random access procedure.

In some embodiments, the link is a cell or a bandwidth part of a cell, and/or the link is deployed on an unlicensed frequency carrier.

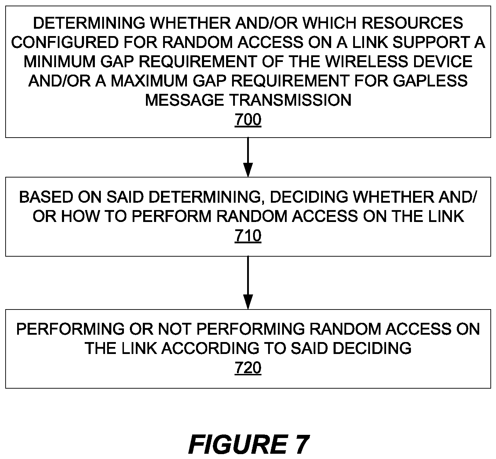

Figure 7 illustrates a method performed by a wireless device 40 according to other embodiments. As shown, the method comprises determining whether and/or which resources configured for random access on a link support a minimum gap requirement of the wireless device 40 and/or a maximum gap requirement for gapless message transmission 12 (Block 700). Here, the minimum gap requirement is a minimum gap required in time between an end of a transmission of a random access preamble 16 and a start of a transmission of a payload 17. According to the maximum gap requirement, a gap in time, if any, between an end of a transmission of a random access preamble 16 and a start of a transmission of a payload 18 must be less than or equal to a maximum gap threshold.

The method as shown also comprises, based on said determining, deciding whether and/or how to perform random access on the link (Block 710). The method may then comprise performing or not performing random access on the link according to said deciding (Block 720).

In some embodiments, said deciding comprises selecting which resources to use for performing random access on the link. In this case, said performing comprises performing random access on the link using the selected resources.

In some embodiments, said deciding comprises selecting which random access preamble to use for performing random access on the link. In this case, said performing comprises transmitting the selected random access preamble.

In some embodiments, said deciding comprises deciding whether and/or how to use gapless message transmission 12 for random access on the link. In this case, said performing or not performing comprises using or not using gapless message transmission 12 for random access on the link according to said deciding.

In some embodiments, said deciding comprises deciding whether to use a 2-step procedure or a 4-step procedure for random access on the link. In this case, said performing or not performing comprises using the 2-step procedure or the 4-step procedure for random access on the link according to said deciding.

In some embodiments, the link is a cell or a bandwidth part of a cell, and/or the link is deployed on an unlicensed frequency carrier.

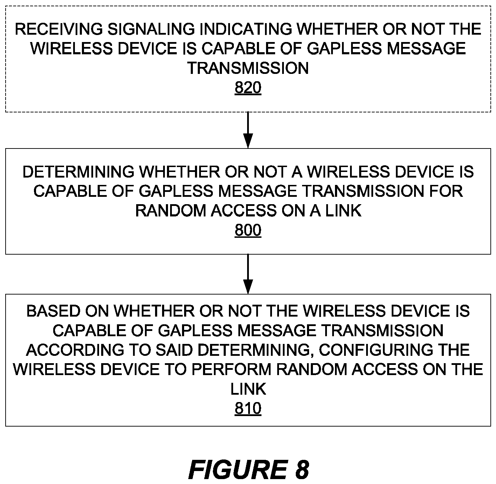

Figure 8 illustrates a method performed by a radio network node 50 according to other embodiments herein. The method comprises determining whether or not a wireless device 40 is capable of gapless message transmission 12 for random access on a link (Block 800). Here, according to gapless message transmission 12, a gap in time, if any, between an end of a transmission of a random access preamble 16 and a start of a transmission of a payload 18 is less than or equal to a maximum gap threshold. The method also comprises, based on whether or not the wireless device 40 is capable of gapless message transmission 12 according to said determining, configuring the wireless device 40 to perform random access on the link (Block 810).

In some embodiments, the method further comprises receiving signaling indicating whether or not the wireless device is capable of gapless message transmission 12 (Block 820). In this case, said determining is based on the received signaling. In some embodiments, the signaling is received from the wireless device 40. In other embodiments, the signaling is received from another network node, e.g., in the case where the signaling comprises a handover request message or a secondary node addition request message.

In some embodiments, said determining comprises deducing whether or not the wireless device 40 is capable of gapless message transmission 12 based respectively on whether or not the wireless device 40 uses gapless message transmission 12 for random access on the link. In one embodiment, for example, said deducing comprises performing energy detection to determine whether or not the wireless device 40 transmits a payload using gapless message transmission 12 for random access on the link.

In some embodiments, said configuring comprises configuring the wireless device 40 with resources for gapless message transmission 12 or resources for non-gapless message transmission for random access on the link, depending respectively on whether or not the wireless device 40 supports or does not support gapless message transmission 12. Alternatively or additionally, said configuring comprises transmitting dedicated signaling to the wireless device 40 indicating said configuring of the wireless device 40. In one embodiment, for example, the dedicated signaling triggers the wireless device 40 to perform a mobility procedure, e.g., where the mobility procedure is a handover, a primary secondary cell group cell (PSCell) addition, a PSCell change, or a secondary cell (SCell) addition. In another embodiment, the dedicated signaling triggers the wireless device 40 to start monitoring a condition for execution of a conditional mobility procedure, e.g., where the conditional mobility procedure is a conditional handover, a conditional primary secondary cell group cell (PSCell) addition, a conditional PSCell change, or a conditional secondary cell (SCell) addition.

In some embodiments, said configuring comprises transmitting, via another radio network node, signaling to the wireless device 40 indicating said configuring of the wireless device 40.

Embodiments herein also include corresponding apparatuses. Embodiments herein for instance include a wireless device 10, 24, 40 configured to perform any of the steps of any of the embodiments described above for the wireless device 10, 24, 40.

Embodiments also include a wireless device 10, 24, 40 comprising processing circuitry and power supply circuitry. The processing circuitry is configured to perform any of the steps of any of the embodiments described above for the wireless device 10, 24, 40. The power supply circuitry is configured to supply power to the wireless device 10, 24, 40.

Embodiments further include a wireless device 10, 24, 40 comprising processing circuitry. The processing circuitry is configured to perform any of the steps of any of the embodiments described above for the wireless device 10, 24, 40. In some embodiments, the wireless device 10, 24, 40 further comprises communication circuitry.

Embodiments further include a wireless device 10, 24, 40 comprising processing circuitry and memory. The memory contains instructions executable by the processing circuitry whereby the wireless device 10, 24, 40 is configured to perform any of the steps of any of the embodiments described above for the wireless device 10, 24, 40.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the wireless device 10, 24, 40. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a radio network node 14, 22, 50 configured to perform any of the steps of any of the embodiments described above for the radio network node 14, 22, 50.

Embodiments also include a radio network node 14, 22, 50 comprising processing circuitry and power supply circuitry. The processing circuitry is configured to perform any of the steps of any of the embodiments described above for the radio network node 14, 22, 50. The power supply circuitry is configured to supply power to the radio network node 14, 22, 50.

Embodiments further include a radio network node 14, 22, 50 comprising processing circuitry. The processing circuitry is configured to perform any of the steps of any of the embodiments described above for the radio network node 14, 22, 50. In some embodiments, the radio network node 14, 22, 50 further comprises communication circuitry.

Embodiments further include a radio network node 14, 22, 50 comprising processing circuitry and memory. The memory contains instructions executable by the processing circuitry whereby the radio network node 14, 22, 50 is configured to perform any of the steps of any of the embodiments described above for the radio network node 14, 22, 50.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

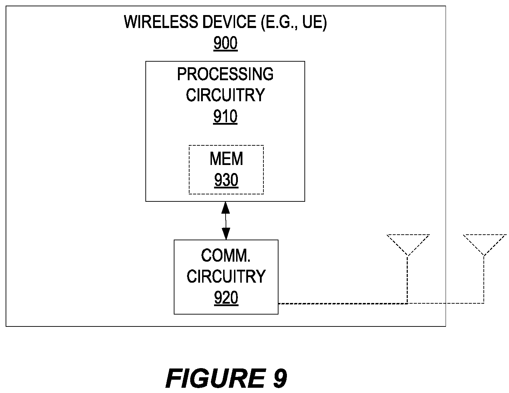

Figure 9 for example illustrates a wireless device 900 (e.g., wireless device 10, 24, or 40) as implemented in accordance with one or more embodiments. As shown, the wireless device 900 includes processing circuitry 910 and communication circuitry 920. The communication circuitry 920 (e.g., radio circuitry) is configured to transmit and/or receive information to and/or from one or more other nodes, e.g., via any communication technology. Such communication may occur via one or more antennas that are either internal or external to the wireless device 900. The processing circuitry 910 is configured to perform processing described above, such as by executing instructions stored in memory 930. The processing circuitry 910 in this regard may implement certain functional means, units, or modules.

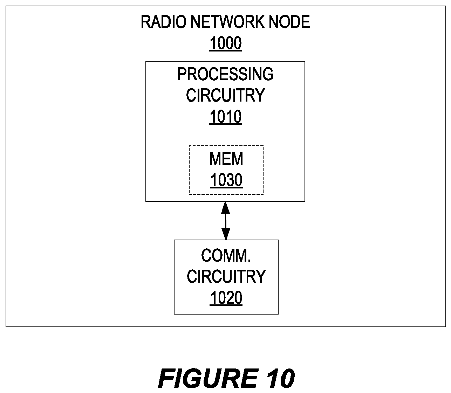

Figure 10 illustrates a network node 1000 (e.g., radio network node 14, 22, or 50) as implemented in accordance with one or more embodiments. As shown, the network node 1000 includes processing circuitry 1010 and communication circuitry 1020. The communication circuitry 1020 is configured to transmit and/or receive information to and/or from one or more other nodes, e.g., via any communication technology. The processing circuitry 1010 is configured to perform processing described above, such as by executing instructions stored in memory 1030. The processing circuitry 1010 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

Some embodiments herein are applicable to New Radio (NR) over an unlicensed band. In this regard, next generation cellular systems are expected to support a wide range of use cases with varying requirements ranging from fully mobile devices to stationary Internet-of-Things (IoT) or fixed wireless broadband devices. The traffic pattern associated with many use cases is expected to consist of short or long bursts of data traffic with a varying length of waiting period in between (here called inactive state). In NR, both license assisted access and standalone operation in unlicensed spectrum (NR-U) (where unlicensed spectrum is also referred to as shared spectrum in this context) are to be supported in 3GPP.

With network operation in unlicensed spectrum follows a number of restrictions. One of them is that a device (e.g. a radio network node or a mobile terminal) has to monitor the shared medium, i.e. the channel, and determine that it is free (not being used by any other device) before starting to transmit on the channel. This procedure is referred to as Listen-Before-Talk (LBT) or Clear Channel Assessment (CCA).

In order to tackle the ever-increasing data demand, NR is considered for both licensed and unlicensed spectrum. NR-U needs to support dual connectivity (DC) and standalone scenarios, where the Medium Access Control (MAC) procedures including Random Access Channel (RACH) and scheduling procedure on unlicensed spectrum are subject to LBT and thus potential LBT failures. In Long Term Evolution (LTE) Licensed-Assisted Access (LAA), there are no such issues since the RACH and scheduling related signaling can be transmitted on the PCell in licensed spectrum instead of unlicensed spectrum.

In unlicensed spectrum, channel sensing should be applied to determine the channel availability before a physical signal is transmitted using the channel. This is the case, for example, for discovery reference signal (DRS) transmission such as the Primary Synchronization Signal (PSS) / Secondary Synchronization Signal (SSS), Physical Broadcast Channel (PBCH), Channel State Information Reference Signal (CSI-RS), control channel transmission such as Physical Uplink Control Channel (PUCCH) / Physical Downlink Control Channel (PDCCH), physical data channel such as Physical Uplink Shared Channel (PUSCH) / Physical Downlink Shared Channel (PDSCH), and uplink sounding reference signal such as Sounding Reference Signal (SRS) transmission.

The Radio Resource Management (RRM) procedures in NR-U would be generally rather similar to those in LAA, since NR-U is aiming to reuse LAA/eLAA/feLAA technologies as much as possible to handle the coexistence between NR-U and other legacy radio access technologies (RATs). Radio Resource Management (RRM) measurements and reporting comprise a special configuration procedure with respect to the channel sensing and channel availability.

In licensed spectrum, a user equipment (UE) measures Reference Signal Received Power (RSRP), and Reference Signal Received Quality (RSRQ) of the downlink radio channel, and provides the measurement reports to its serving eNB/gNB. However, they don't reflect the interference strength on the carrier. Another metric Received Signal Strength Indicator (RSSI) can serve for such purpose. At the eNB/gNB side, it is possible to derive RSSI based on the received RSRP and RSRQ reports. However, this requires that they must be available. Due to the LBT failure, some reports in terms of RSRP or RSRP may be blocked, e.g., either due to that the reference signal transmission (DRS) is blocked in the downlink or the measurement report is blocked in the uplink. Hence, the measurements in terms of RSSI are very useful. The RSSI measurements together with the time information concerning when and how long of time UEs have made the measurements can assist the gNB/eNB to detect the hidden node. Additionally, the gNB/eNB can measure the load situation of the carrier which is useful for the network to prioritize some channels for load balance and channel access failure avoidance purposes.

LTE LAA has defined to support measurements of averaged RSSI and channel occupancy) for measurement reports. The channel occupancy is defined as the percentage of time that RSSI was measured above a configured threshold. For this purpose, a RSSI measurement timing configuration (RMTC) includes a measurement duration (e.g. 1-5 ms) and a period between measurements (e.g. {40, 80, 160, 320, 640} ms).

Hence, channel access/selection for LAA was one of the important aspects for coexistence with other RATs such as Wi-Fi. For instance, LAA has aimed to use carriers that are congested with Wi-Fi.

Some embodiments more particularly apply to the context of channel access procedure in NR-U. In this regard, Listen-before-talk (LBT) is designed for unlicensed spectrum co-existence with other RATs. In this mechanism, a radio device applies a clear channel assessment (CCA) check (i.e. channel sensing) before any transmission. The transmitter involves energy detection (ED) over a time period compared to a certain energy detection threshold (ED threshold) in order to determine if a channel is idle. In case the channel is determined to be occupied, the transmitter performs a random back-off within a contention window before next CCA attempt. In order to protect the ACK transmissions, the transmitter must defer a period after each busy CCA slot prior to resuming back-off. As soon as the transmitter has grasped access to a channel, the transmitter is only allowed to perform transmission up to a maximum time duration (namely, the maximum channel occupancy time (MCOT)). For quality of service (QoS) differentiation, a channel access priority based on the service type has been defined. For example, four LBT priority classes are defined for differentiation of channel access priorities between services using different contention window sizes (CWS) and MCOT durations.

As described in 3GPP TR 38.889 v16.0.0, the channel access schemes for NR-based access for unlicensed spectrum can be classified into the following categories.

Cat-1: Immediate transmission after a short switching gap. This is used for a transmitter to immediately transmit after an uplink / downlink switching gap inside a COT. The switching gap from reception to transmission is to accommodate the transceiver turnaround time and is no longer than 16 µs.

Cat-2: LBT without random back-off. The duration of time that the channel is sensed to be idle before the transmitting entity transmits is deterministic.

Cat-3: LBT with random back-off with a contention window of fixed size. The LBT procedure has the following procedure as one of its components. The transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel.

Cat-4: LBT with random back-off with a contention window of variable size. The LBT procedure has the following as one of its components. The transmitting entity draws a random number N within a contention window. The size of contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

For different transmissions in a COT and different channels/signals to be transmitted, different categories of channel access schemes can be used.

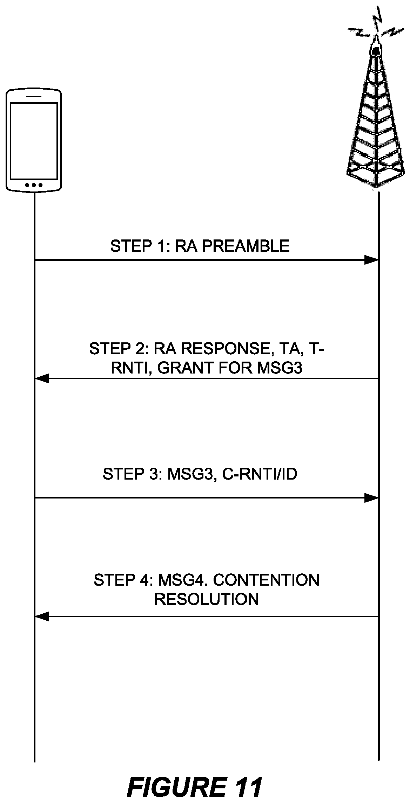

4-step random access herein may refer to the following, e.g., as exemplified in the context of NR in Figure 11.

### Step 1: Preamble transmission

The UE randomly selects a random access (RA) preamble (*PREAMBLE_INDEX*) corresponding to a selected SS/PBCH block, and transmits the preamble on the PRACH occasion mapped by the selected SS/PBCH block. When the gNB detects the preamble, it estimates the Timing alignment (TA) the UE should use in order to obtain UL synchronization at the gNB.

### Step 2: RA response (RAR)

The gNB sends a RA response (RAR) including the TA, the Temporary Cell Radio Network Temporary Identifier (TC-RNTI) (temporary identifier) to be used by the UE, a Random Access Preamble identifier that matches the transmitted PREAMBLE INDEX and a grant for Msg3. The UE expects the RAR and thus, monitors the PDCCH addressed to Random Access Radio Network Temporary Identifier (RA-RNTI) to receive the RAR message from the gNB until the configured RAR window (ra-ResponseWindow) has expired or until the RAR has been successfully received.

From 38.321 v16.0.0: "The MAC entity may stop ra-ResponseWindow (and hence monitoring for Random Access Response(s)) after successful reception of a Random Access Response containing Random Access Preamble identifiers that matches the transmitted PREAMBLE INDEX."

### Step 3: "Msg3" (UE ID or UE-specific C-RNTI)

In Msg3 the UE transmits its identifier (UE ID) for initial access or if it is already in RRC_CONNECTED or RRC_INACTIVE mode and needs to e.g. resync, its UE-specific RNTI. If the gNB cannot decode Msg3 at the granted UL resources, it may send a Downlink Control Information (DCI) addressed to TC-RNTI for retransmission of Msg3. Hybrid Automatic Repeat Request (HARQ) retransmission is requested until the UEs restart the random access procedure from step 1 after reaching the maximum number of HARQ retransmissions or until Msg3 can be successfully received by the gNB.

### Step 4: "Msg4" (contention resolution)

In Msg4 the gNB responds by acknowledging the UE ID or Cell Radio Network Temporary Identifier (C-RNTI). The Msg4 gives contention resolution, i.e. only one UE ID or C-RNTI will be sent even if several UEs have used the same preamble (and the same grant for Msg3 transmission) simultaneously.

For Msg4 reception, the UE monitors TC-RNTI (if it transmitted its UE ID in Msg3) or C-RNTI (if it transmitted its C-RNTI in Msg3).

In LTE, the 4-step RA cannot be completed in less than 14 ms / Transmission Time Interval / Subframe.

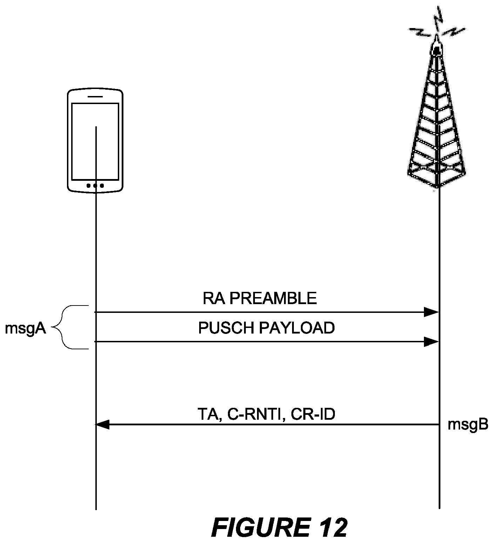

Other embodiments herein exploit a 2-step random access procedure. The 2-step RA gives much shorter latency than the ordinary 4-step RA. In the 2-step RA the preamble and a message corresponding to Msg3 (msgA PUSCH) in the 4-step RA can, depending on configuration, be transmitted in two subsequent slots. The msgA PUSCH is sent on a resource dedicated to the specific preamble. This means that both the preamble and the Msg3 face contention but contention resolution in this case means that either both preamble and Msg 3 are sent without collision or both collide. The 2-step RA procedure is depicted in Figure 12.

Upon successful reception msgA, the gNB will respond with a msgB. The msgB may be either a "successRAR", "fallbackRAR or "Back off". The content of msgB has been agreed as seen below. We note in particular that fallbackRAR provides a grant for a Msg3 PUSCH that identifies resources in which the UE should transmit the PUSCH, as well as other information.

Note: The notations "msgA" and "MsgA" are used interchangeably herein to denote message A. Similarly, the notations "msgB" and "MsgB" are used interchangeably herein to denote message B.

The possibility to replace the 4-step message exchange by a 2-step message exchange would lead to reduced RA latency and that fewer LBTs (in case of unlicensed) needing to be executed. On the other hand, the 2-step RA will consume more resources since it uses contention-based transmission of the data. This means that the resources that are configured for the data transmission may often be unused.

If both the 4-step and 2-step RA are configured in a cell on shared PRACH resources (and for the UE), the UE will choose its preamble from one specific set if it wants to do a 4-step RA, and from another set if it wants to do a 2-step RA. Hence a preamble partition is done to distinguish between 4-step and 2-step RA when shared PRACH resources are used. Alternatively, the PRACH configurations are different for the 2-step and 4-step RA procedure, in which case it can be deduced from where the preamble transmission is done if the UE is doing a 2-step or 4-step procedure.

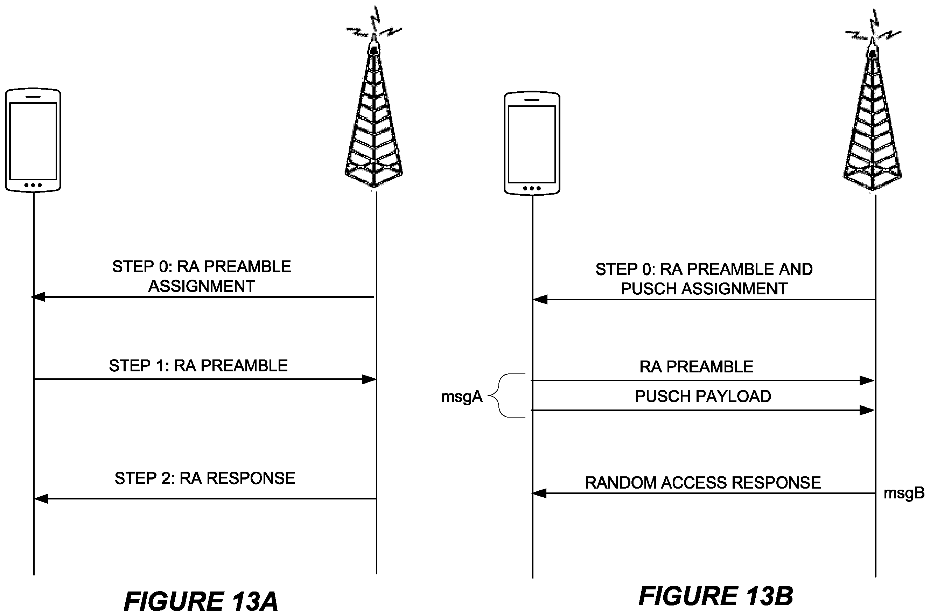

Contention-Free Random Access (CFRA) procedures for 4-step and 2-step random access are illustrated in Figures 13A and 13B, respectively. The network assigns a preamble for CFRA in 4-step RACH or a preamble and PUSCH for CFRA in 2-step RACH, and it does not configure CFRA resources for 4-step and 2-step RA types at the same time for a Bandwidth Part (BWP). And CFRA with 2-step RA type is only supported for handover.

The Msg1 of 4-step includes only a preamble on PRACH, while the MSGA of the 2-step RA type includes a preamble on PRACH and a payload on PUSCH. After Msg1 transmission or MSGA transmission, UE monitors for a response from the network within a configured window. For CFRA, upon receiving the network response, the UE ends the random access procedure.

In some embodiments, for msgA retransmission (i.e. preamble and PUSCH) it is assumed that the UE retries on 2-step RACH. In one embodiment, the UE can fallback to 4-step RACH after a certain time. The network response to msgA (i.e. msgB/msg2) can include the following: SuccessRAR, FallbackRAR, or Backoff Indication. The FallbackRAR may contain the following fields: RAPID, UL grant (to retransmit the msgA payload), TC-RNTI, and TA command.

The following fields can be included in the successRAR when CCCH message is included in msgA: Contention resolution ID; C-RNTI; and TA command.

Upon receiving the fallbackRAR, the UE shall proceed to msg3 step of 4-step RACH procedure.

In some embodiments, RA type selection is performed before beam selection. There is no need to reexecute RA selection criteria upon fallback failure (i.e if reception of msg3 fails). The UE re-transmits using msgA. If the random access procedure is not successfully completed even after transmitting the msgA `N' times, UE fallbacks to 4 step RACH procedure i.e. UE only transmits the PRACH preamble. The network can configure the number of times `N', a UE can attempt to re-transmit msgA during the random access procedure.

For NR-U, the UE will have to do a LBT before transmitting the preamble in the selected PRACH occasion (RO). In case there is no gap (or if the gap is less than 16 µs) between the RO and the PUSCH occasion (PO) where the msgA PUSCH is transmitted (i.e. between the end of the PRACH preamble transmission and the start of the PUSCH transmission), the msgA PUSCH is transmitted without doing a new LBT. This is referred to herein as msgA gapless transmission, i.e., there is either no gap or the gap is less than 16us. However, in case there is a gap (longer than 16 µs) between the RO and the PO where the msgA PUSCH is transmitted the UE is forced to do a new LBT before transmitting msgA PUSCH. This is referred to herein as non-gapless msgA transmission. Doing a new LBT will increase the probability that the msgA transmission fail due to unsuccessful LBT.

For licensed access, the minimum transmission gap between the end of msgA PRACH and the beginning of msgA PUSCH (guard time excluded) is no less than Ngap symbols, as specified in TS 38.213, i.e., 2 or 4 symbols depending on the SCS (subcarrier spacing). This minimum gap is not applied for NR-U.

Some embodiments herein address an issue that may occur in NR-U systems; namely, that the msgA transmission fails due to LBT. In case the preamble fails LBT, there will be no PUSCH transmission and the UE will retry msgA transmission when the msgB window expires. In case the preamble has a successful LBT and is transmitted but the PUSCH fails LBT (i.e. there is a gap between PRACH and msgA PUSCH exceeding 16 µs), the gNB has the option to respond with a fallbackRAR containing a grant for msgA PUSCH (PUSCH) transmission. If this is not received by the UE, it will retry msgA transmission when the msgB window expires.

In many configurations, there will be several consecutive PRACH occasions (ROs) within a PRACH slot. The UE will heretofore randomly select one of these ROs for its preamble transmission. In particular, the UE heretofore determines the next available PRACH occasion from the PRACH occasions corresponding to the selected Synchronization Signal Block (SSB) (the MAC entity shall heretofore select a PRACH occasion randomly with equal probability among the consecutive PRACH occasions allocated for 2-step random access according to subclause 8.1 of TS 38.213 v16.0.0, corresponding to the selected SSB; the MAC entity may take into account the possible occurrence of measurement gaps when determining the next available PRACH occasion corresponding to the selected SSB.

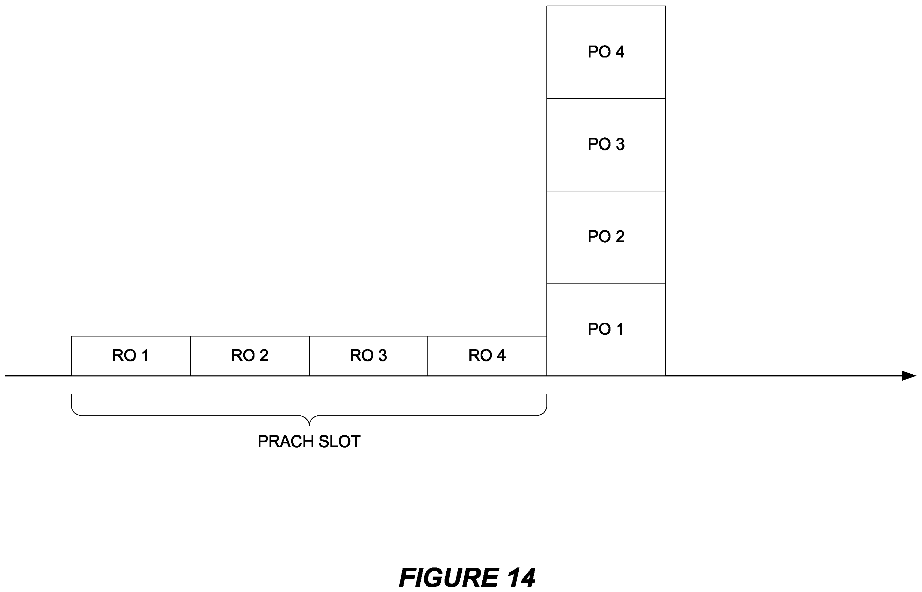

A high level example illustrating a configuration of this type is shown in Figure 14. Shown is a 2-step configuration with 4 consecutive ROs in a PRACH slot with 4 associated frequency-multiplexed (FDMed) POs. 4 ROs are configured in the PRACH slot for a certain SSB. In this example, these 4 ROs are mapped to 4 PUSCH occasions (POs), e.g. a preamble transmission in RO 1 will have its PUSCH transmission in PO 1, etc.

The UE will have to do a LBT before transmitting the preamble in the selected RO. In case the selected RO is RO 4 there is no gap (or at least the gap is smaller than 16 µs) between the RO and the PO where the msgA PUSCH is transmitted. In this case, the UE does not do a new LBT when transmitting msgA PUSCH. However, in case the selected RO is e.g. RO 1, there is a gap (longer than 16 µs) between the RO and the PO where the msgA PUSCH is transmitted. In this case, the UE is forced to do a new LBT when transmitting msgA PUSCH. Doing a new LBT will increase the probability that the msgA transmission fails due to unsuccessful LBT.

Consider now /.,mnbvbnm,./additional details regarding MsgA configurations and MsgA preamble to MsgA PUSCH mapping according to some embodiments.

A RACH occasion is the time frequency resource used for a preamble transmission. In some embodiments, the RACH occasions for 2-step RACH can be either separately configured (also known as Type-2 random access procedure with separate configuration of PRACH occasions with Type-1 random access procedure) or shared with 4-step RACH (also known as Type-2 random access procedure with common configuration of PRACH occasions with Type-1 random access procedure) in which case different set of preamble IDs will be used.

For Type-2 random access procedure with common configuration of PRACH occasions with Type-1 random access procedure, a UE is provided a number N of SS/PBCH blocks associated with one PRACH occasion by *ssb-perRACH-OccasionAndCB-PreamblesPerSSB* and a number *Q* of contention based preambles per SS/PBCH block per valid PRACH occasion by *MsgA-CB-PreamblesPerSSB.* The PRACH transmission can be on a subset of PRACH occasions associated with a same SS/PBCH block index for a UE provided with a PRACH mask index by *MsgA-ssb-sharedRO-MaskIndex.*

For Type-2 random access procedure with separate configuration of PRACH occasions with Type-1 random access procedure, a UE is provided a number N of SS/PBCH blocks associated with one PRACH occasion and a number *R* of contention based preambles per SS/PBCH block per valid PRACH occasion by *ssb-perRACH-OccasionAndCB-PreamblesPerSSB-MsgA* when provided; otherwise, by *ssb-perRACH-OccasionAndCB-PreamblesPerSSB.*

A PUSCH occasion (PO) is defined as the time frequency resource used for one PUSCH transmission. For one MsgA PUSCH occasion, one or more Demodulation Reference Signal (DMRS) resources can be configured, one of which will be selected for each PUSCH transmission with in the PUSCH occasion. The term PUSCH resource unit (PRU) is used herein to define a PUSCH occasion with one DMRS resource.

A set of PUSCH occasions is configured per MsgA PUSCH configuration which are relative to and mapped by a group of preambles in a set of ROs in one PRACH slot. A mapping between one or multiple PRACH preambles and a PUSCH occasion associated with a DMRS resource is according to the mapping order as described below. The design may consider factors such as resource utilization efficiency and decoding complexity at gNB. For different RA events and different purposes, the payload size of a MsgA may vary in a range from a few bytes to a few hundred bytes. For better spectral efficiency, different mapping rules between preambles in each RO and associated PUSCH resource unit are expected such as: One-to-One Mapping or Many-to-One Mapping.

Each consecutive number of *N*_{preamble} preamble indexes from valid PRACH occasions in a PRACH slot
- first, in increasing order of preamble indexes within a single PRACH occasion
- second, in increasing order of frequency resource indexes for frequency multiplexed PRACH occasions
- third, in increasing order of time resource indexes for time multiplexed PRACH occasions within a PRACH slot are mapped to a valid PUSCH occasion and the associated DMRS resource
- first, in increasing order of frequency resource indexes *f_{id}* for frequency multiplexed PUSCH occasions
- second, in increasing order of DMRS resource indexes within a PUSCH occasion, where a DMRS resource index *DMRS_{id}* is determined first in an ascending order of a DMRS port index and second in an ascending order of a DMRS sequence index [4, TS 38.211]
- third, in increasing order of time resource indexes *t_{id}* for time multiplexed PUSCH occasions within a PUSCH slot
- fourth, in increasing order of indexes for *Nₛ* PUSCH slots
where *N*_{preamble} = *ceil*(*T*_{preamble}/*T*_{PUSCH}), *T*_{preamble} is a total number of valid PRACH occasions per association pattern period multiplied by the number of preambles per valid PRACH occasion provided by *MsgA-PUSCH-PreambleGroup,* and *T*_{PUSCH} is a total number of valid PUSCH occasions per PUSCH configuration per association pattern period multiplied by the number of DMRS resource indexes per valid PUSCH occasion provided by *MsgA-DMRS-Config.*

Some embodiments herein address challenges in this context. In particular, in NR-U scenarios, for a 2-step RA based transmission, transmission of msgA using at most one LBT is beneficial, especially in cases when channel occupancy is high. Using a single LBT prior to transmission of a MsgA means that the gap between the preamble and the payload (i.e. MsgA PUSCH) needs to be sufficiently short, i.e. less than 16 µs. This case is referred to as gap-less MsgA transmission (i.e. gap-less MsgA transmission refers to cases where the gap between the PRACH transmission (i.e. the RO) and the MsgA PUSCH transmission (i.e. the PO/PRU) is in the range 0 µs ≤ gap < 16 µs). A corresponding UE capability indicating that a UE supports gap-less MsgA may be introduced for NR-U in NR Rel-16. The reason for the capability indication is that some low end UEs might not support gap-less MsgA transmission, because of the large power level difference between the PRACH and PUSCH.

In most cases, a UE provides its capability information to a gNB during its initial access procedure. This means that, heretofore, the gNB would not be aware of the UE's gap-less MsgA capability prior to reception of a 2-step RA transmission initiated by the UE for initial access.

A problematic case then is if a cell is configured for gap-less msgA transmission and the UE does not support this. Heretofore, this could result in situations where the UE selects PRACH and PUSCH resources where the UE cannot transmit msgA, or at least not the msgA PUSCH. There could also be configurations where some RO-PO combinations require gap-less transmission capability while other RO/PO combinations do not.

For the above aspects, there are two issues observed. Issue 1: signaling means are needed for the gNB to inform UEs on whether the cell supports gap-less MsgA. Also needed are cell selection and re-selection procedures in relation to different combinations of UE gapless MsgA transmission capability and MsgA resource configurations (with or without gap). Issue 2: UE behavior needs to be specified for UEs not supporting gap-less transmission in cells where gap-less msgA transmission is configured.

Some embodiments herein include corresponding solutions to address the above issues.

In licensed frequency bands, the MsgA gap requirement for a UE between the MsgA preamble and MsgA PUSCH is defined as below. In the procedures defined in section 8.1A of 3GPP TS 38.213 V16.0.0, it's also possible that the gap between preamble and a PO does not meet the requirement. If a UE capability is defined to support both transmission with a gap and without a gap, then it is not a network misconfiguration if the network configures a PO closer to a preamble than the gap requirement.

For operation without shared spectrum channel access, the PUSCH transmission is after the PRACH transmission by at least *N* symbols where *N* = 2 for *µ* = 0 or *µ* = 1, *N* = 4 for *µ* = 2 or *µ* = 3, and *µ* is the subcarrier spacing (SCS) configuration for the active uplink bandwidth part (BWP).

Furthermore, when the UE capability is known, e.g. in the case of CFRA, the network may also need to configure the MsgA resources or determine an RA type taking into account of the minimum gap size between MsgA preamble and MsgA PUSCH that the UE supports. In addition, the RA type supported should also be considered. Related methods are also provided herein.

For example, a first embodiment herein includes a method in a UE of selecting a cell to access and random access resources to use on the cell, comprising one or more of: (a) Receiving signaling indicating that the cell supports transmission by a UE of a first PUSCH that follows a PRACH by a delay less than a predetermined value; (b) If the UE supports transmission of a PUSCH that follows a PRACH by a delay less than the predetermined value, transmitting the PRACH and first PUSCH with a delay less than the predetermined value on resources used by the cell; and (c) If the UE does not support transmission of a PUSCH that follows a PRACH by a delay less than the predetermined value, performing at least one of: determining to not access the cell, transmitting the PRACH and first PUSCH with a delay not less than the predetermined value on resources used by the cell, or transmitting the PRACH but not the first PUSCH on resources used for the cell.

In one example of the first embodiment, transmitting the PRACH but not the first PUSCH on resources used for the cell further comprises: Receiving a random access response addressed to the PRACH; and Transmitting a second PUSCH in resources identified by the random access response. For example, transmitting the PRACH may comprise transmitting a 4-step RA preamble, i.e. a preamble designated for 4-step RA. In another example, transmitting the PRACH comprises transmitting a 2-step RA preamble, i.e. a preamble designated for 2-step RA.

Alternatively or additionally, resources in the first embodiment may be further identified as available within a bandwidth part of the cell.

The first embodiment may enable a UE that does not support gap-less RACH-PO to use cells or resources that have an RO-PO gap.

A second embodiment herein includes a method for a random access procedure for shared spectrum access in a UE, comprising one or more of: (i) Receiving a first and a second configuration identifying a random access preamble occasion (`RO') and a PUSCH transmission occasion (`PO'), respectively; (ii) Determining a delay between the end of a random access preamble transmission in the RO and the start of the PO from the first and second configurations; (iii) When the delay is not more than a first predetermined value, transmitting a random access preamble in its RO, wherein the UE is identified as supporting transmission of the random access preamble followed by a PUSCH at a delay not more than the predetermined value; (iv) When the delay is not less than a second value, determining if a slot is idle and transmitting the PUSCH it its PO if the slot is idle; and (v) when the delay is less than the second value, transmitting the PUSCH it its PO.

The second embodiment may enable a 'gapless' NR-U UE to select a PO according to its low RO-PO delay capability and perform LBT ensuring that the RO-PO delay meets the requirements of the LBT category the UE uses).

A third embodiment includes a method for a random access procedure in a UE, comprising one or more of: (i) Receiving a first and a second configuration identifying a random access preamble occasion (`RO') and a PUSCH transmission occasion (`PO'), respectively; (ii) Determining a delay between the end of a random access preamble transmission in the RO and the start of the PO from the first and second configurations; (iii) When the delay is not more than a first predetermined value, transmitting a random access preamble in its RO and a PUSCH in its PO; and (iv) when the delay is more than the first predetermined value, transmitting a second random access preamble not associated with a PUSCH.

The third embodiment may for example enable a UE to select a PO with large enough RO-PO delay and otherwise transmit a 4-step preamble.

A sixth embodiment includes a method for a random access procedure in a UE, comprising one or more of: (i) Receiving a first and a second configuration identifying a random access preamble occasion (`RO') and a PUSCH transmission occasion (`PO'), respectively; (ii) Determining a delay between the end of a random access preamble transmission in the RO and the start of the PO from the first and second configurations; (iii) When the delay is not more than a first predetermined value, transmitting a random access preamble in its RO and a PUSCH in its PO; and (iv) When the delay is more than the first predetermined value, transmitting the random access preamble.

The sixth embodiment may enable a UE to select a PO with large enough RO-PO delay and otherwise transmit the 2-step preamble.

Some further UE aspects include e.g.: the UE may apply an offset to a cell in the cell (re)selection procedure in order to favor a cell with certain RA configurations, e.g. support for gapless MsgA transmission or support for non-gapless MsgA transmission, depending on the UE's RA capabilities, in particular whether the UE supports or does not support gapless MsgA transmission.

A seventh embodiment herein includes a method in a first network node for supporting random access in a cell, comprising: (i) acquiring information related to a UE's capability to support or not support gapless MsgA transmission; and (ii) configuring the UE for random access based on the acquired information.

In one example of the seventh embodiment, the step of *acquiring* comprises receiving the information in a signaling message from the UE.

In another example of the seventh embodiment, the step of *acquiring* comprises receiving a MsgA from the UE and determining that the MsgA transmission was gapless. The method may further comprise determining that the UE is capable of gapless MsgA transmission.

In yet another example of the seventh embodiment, the step of *acquiring* comprises receiving a MsgA from the UE and determining that the MsgA transmission comprised a gap (longer than 16 µs), determining that the cell provides both gapless and non-gapless RO-PO combinations and concluding that the UE does not support gapless MsgA transmission.

In still another example of the seventh embodiment, the step of *acquiring* comprises receiving the information in a message from another network node. [Note: A handover case where the UE's capability is indicated in the XnAP Handover Request message.] In one such embodiment, the message is an XnAP Handover Request message or an XnAP S-Node Addition Request message.

In another example of the seventh embodiment, the configuring step further comprises: (i) configuring the UE with gapless MsgA transmission resources (i.e. RO-PO combinations with a gap smaller than 16 µs between the RO and the PO), if the acquired information indicates that the UE supports gapless MsgA transmission, or (ii) configuring the UE with non-gapless MsgA transmission resources (i.e. RO-PO combinations with a gap larger than 16 µs between the RO and the PO), if the acquired information indicates that the UE does not support gapless MsgA transmission. In one such case, the MsgA transmission resource configuration is sent to the UE in a dedicated RRC message, e.g., the dedicated RRC message triggers the UE to perform a mobility procedure involving a target cell controlled by a second gNB. The mobility procedure may be one of a handover, a PSCell addition, a PSCell change, or a SCell addition. Alternatively or additionally, the dedicated RRC message may trigger the UE to start monitoring a condition for execution of a conditional mobility procedure, e.g., the conditional mobility procedure is one of a conditional handover, a conditional PSCell addition, a conditional PSCell change, or a conditional SCell addition.

In one example of the seventh embodiment, the *configuring* comprises transmitting the configuration to the UE via a second network node. [Note: The first network node is a target node or candidate target node which provides the RA configuration for the UE to apply in the target cell.]

In another example of the seventh embodiment, the configuring comprises receiving the configuration in a message from a second network node. [Note: The first network node is a source node which receives the RA configuration - as a part of more extensive radio resource configuration - from a target node or a candidate target node, for forwarding to the UE.] In one such example, the message is an XnAP Handover Request Acknowledge message or an XnAP S-Node Addition Request Acknowledge message.

Some further network node (gNB) aspects include e.g.:
- The network node may indicate to a UE whether it supports gapless MsgA transmission.
- The network node may support different RA configuration variants for a cell, wherein not all configuration variants include gapless MsgA transmission resources and wherein the network node may choose to activate or deactivate the configuration of gapless MsgA transmission resources based on various conditions, including e.g. the load in the cell or on processing resources associated with the cell, the QoS required by served UEs, the channel occupancy.
- The network node may provide one or more offset(s) to apply in the cell (re)selection procedure depending on the combination of the UE's gapless MsgA transmission capability (support or no support) and the RA configuration (in particular the 2-step RA configuration and the presence of absence of gapless MsgA transmission resources).

Certain embodiments may provide one or more of the following technical advantage(s). With the proposed mechanisms, the UE's behavior in situations where its gapless MsgA capability does not perfectly match the network's MsgA configurations becomes well defined and ensures smooth and efficient operation in all cases. Alternatively or additionally, the random access performance will be enhanced and/or the QoS of the associated services are enhanced.

More particularly, the network may or may not be able to support gap-less MsgA transmission and may or may not configure MsgA resources with RO/PO combinations with a gap smaller than 16 µs between the RO and the PO. According to some embodiments herein, in cases where the network does not support, or does not configure, gap-less transmission, it may indicate so via common or dedicated signaling to the UE. However, network capability may not be indicated or may be indicated explicitly. Therefore, alternatives for configuring gap-less operation on a cell are to configure UEs in the cell to access the cell using gap-less transmission, or to configure the ROs and POs on the cell such that at least some of the RO/PO combinations are gap-less. Therefore as used herein, unless stated otherwise, cases where a network supports gap-less transmission can be identified as when the network signals this directly, when it configures the UE to access the cell using gap-less MsgA transmission, or when it configures random access resources such that gap-less MsgA transmission is possible (or required) on the cell.

### Configuration and signaling aspects

In a first embodiment, a gNB can signal whether the cell is supporting gap-less MsgA transmission in system information (in the MIB or in one of the SIBs, e.g. SIB1). A new field may be introduced accordingly. Alternatively, the signaling is carried using Reserved fields or reusing existing fields.

A gNB may also signal whether the cell supports gapless MsgA transmission through the 2-step RA configuration, in particular the RO and PO configuration, wherein the UE can derive the length of the RO-PO-gap based on the delay/gap between the configured RO-PO combinations.

The gNB may indicate any of:
- The cell has 2-step RA configuration supporting only gapless MsgA transmission.
- The cell has 2-step RA configuration supporting both gapless MsgA transmission and MsgA transmission with gap.
- The cell has 2-step RA configuration supporting only MsgA transmission with gap.

In a second embodiment, a cell is configured with gap-less MsgA transmission feature. The cell enables or disables the features based on conditions such as:
1) The cell load. Supporting gap-less MsgA transmission would add extra processing load to the gNB. Therefore, the gNB may decide to enable the feature only in case of low load. When the cell load is above a configured threshold, the gNB can disable the feature. Here, the load may be nuanced and divided into different kinds of load, affecting different parts or different functions or functional entities of a gNB. In this case, the load on the processing resources handling random access, and in particular 2-step random access, may be what determines whether the gNB activates the gapless MsgA transmission feature.
2) Whether or not there are served UEs, e.g. UEs in RRC_CONNECTED state, employing services with critical QoS requirements such as critical latency requirements which would be beneficial to apply gap-less MsgA transmission.
3) The current (or recently measured) channel occupancy (or a recent average of channel occupancy measurements, e.g. a weighted average or an exponential average), in case the gNB operates the cell in unlicensed spectrum.

Whenever the gNB enables or disables the feature, the gNB sends signaling to relevant UEs via signaling transmitted in a broadcast/group cast fashion or dedicated signaling transmitted to dedicated UEs. The signaling may be carried via system information, dedicated Radio Resource Control (RRC) signaling, Medium Access Control (MAC) Control Element (CE) or Downlink Control Information (DCI).

In an alternative, the network (NW) can use BWP switching type of signalling for controlling the use of Serving Cell(s) supporting gap-less MsgA transmission. By activating an inactive BWP and/or deactivate an active BWP at a time, this BWP signalling can facilitate the use of a set of configured gap-less supported BWPs, e.g. at RA procedure initialization. This could be controlled by PDCCH indicating a downlink assignment, an uplink grant or using a MAC CE signalling or other based on UE capability. As another alternative, activation and deactivation of secondary cells (SCells) may be used in a similar way.

In a third embodiment, a cell may be configured with both gap-less MsgA transmission and non-gap-less MsgA transmission. There may be several options to configure the cell.

Option 1: the cell is configured with multiple MsgA PUSCH configurations or MsgA transmission configurations. Wherein, at least one configuration is associated with a gapless MsgA transmission based 2-step RA, while at least another configuration is associated with a non-gap-less MsgA transmission based 2-step RA.

Option 2: the cell is configured with at least one MsgA PUSCH configuration or MsgA transmission configurations which contains both gap-less POs and non-gap-less POs. In the configuration, one or multiple preambles in each RO may be mapped to at least one gapless PO and at least one non gap-less PO. Alternatively, there are only preambles in specific ROs are mapped to at least one gap-less PO and at least one non gap-less PO, while preambles in other ROs are mapped to only one PO (either gap-less or non gap-less).

In an alternative embodiment, or as an addition to the above, for where the cell frequency has been partitioned into Bandwidth Parts, BWP; in which case these UEs are assigned/configured BWPs for where only some are configured with support of gap-less MsgA transmission BWP(s).

In some embodiments, a gNB may acquire information about the UE's gapless MsgA transmission capability, e.g. if the UE supports or does not support gapless MsgA transmission. The gNB may acquire this information in different ways, including:
- Explicit signaling from the UE, e.g. RRC signaling of UE capability information.
- If the gNB receives a gapless MsgA transmission, the gNB may determine that the UE supports gapless MsgA transmission.
- If the gNB receives a non-gapless MsgA transmission from a UE in a cell where support for gapless MsgA transmission is provided, the gNB may infer that the UE (probably) does not support gapless MsgA transmission.
- A gNB may receive the information from another gNB. This may occur when the gNB is a target gNB of a mobility procedure, or a candidate target gNB of a conditional mobility procedure, and receives the information during the preparation phase of a (conditional) mobility procedure, e.g. in an XnAP Handover Request message in case of a handover or an XnAP S-Node Addition Request message. Other mobility procedures in this context include PSCell addition, PSCell change and SCell addition.

A gNB may configure a UE with RA configuration, in particular 2-step RA configuration and gapless or non-gapless MsgA transmission recourses based on information about the UE's RA capabilities, in particular whether the UE supports gapless MsgA transmission. This may occur e.g. in conjunction with a mobility procedure (or a conditional mobility procedure) where the target gNB (or (candidate target gNB) provides a configuration for the UE to apply when accessing the target cell. This configuration is then sent to the source gNB in an XnAP message, such as the XnAP Handover Request Acknowledge message or the XnAP S-Node Addition Request Acknowledge message, after which the source gNB forwards the configuration to the UE in an RRC message.

### UE aspects

In a first embodiment, for a UE configured with the capability to support gap-less MsgA transmission, during cell selection and reselection procedure, the UE selects a suitable cell to camp on not only considering the ordinary measurements in terms of downlink (DL) radio quality, but also considering if the cell supports (i.e. has configured) gapless MsgA transmission. The UE selects the cell providing strongest DL radio connection (e.g., in terms of RSRP or RSRQ) and supporting gap-less MsgA transmission. If there is not any cell supporting gap-less MsgA transmission, the UE may select the cell providing strongest DL radio connection (e.g., in terms of RSRP or RSRQ) and supporting 2-step RA. When selecting a cell not supporting gap-less transmission but still transmitting using 2-step RACH, the UE may only transmit on POs that have a large enough gap between the PO and the preamble that the UE transmits. A benefit of selecting a cell based on whether gap-less transmission is supported is that the UE may have minimal latency in 2-step RACH transmission, presuming that cells with sufficiently good radio link quality for the UE are available. If there is not any cell supporting 2-step RA, the UE may select the cell providing strongest DL radio connection (e.g., in terms of RSRP or RSRQ).

In an alternative embodiment, the UE may not employ a "layered" cell (re)selection procedure (such as considering a cell's support or no support for gapless MsgA transmission as a first condition and then considering the channel quality (e.g. RSRP or RSRQ) among the cells fulfilling the first condition), but rather a employs a cell (re)selection procedure which considers both these aspects in a combined, integrated or weighted manner. To this end, a UE supporting gapless MsgA transmission may for instance apply an offset to the measured channel quality of a cell depending on its support or no support for gapless MsgA transmission, such that e.g. a first cell that supports gapless MsgA transmission is favored over a second cell which does not support gapless MsgA transmission, even if the second cell has a similar channel quality as the first cell, or even slightly better (but less than the offset) channel quality than the first cell. Similarly, a UE which does not support gapless MsgA configuration may favor cells which only have MsgA resource configurations with gaps or cells which have at least one or some MsgA resource configuration(s) with gap(s), while a cell which does not have any MsgA resource configuration with gap (i.e. only gapless MsgA resource configuration(s) or only 4-step RA configuration(s)) would be (re)selected only if its channel quality is more than the offset better than any other candidate cell which does have MsgA resource configuration(s) with gap(s).

As further variations, the UE may apply different offsets to a cell's channel quality depending on further aspects of the random access configuration in the cell, such as the density (e.g. the density in the time domain) of PRACH occasions or PRACH occasions for 2-step RA, or whether the cell is configured with both gapless and non-gapless MsgA resources, or whether the cell supports both 4-step RA and 2-step RA or only 2-step RA or only 4-step RA. When relevant, application of the offset(s) still depends on the UE's capabilities, i.e. the UE's support or lack of support for gapless MsgA transmission or the UE's support or lack of support for 2-step RA.

The offset(s) to apply may be signaled to the UE via the system information or dedicated signaling, e.g. dedicated RRC signaling. In the latter case, the offset(s) may be signaled in an RRCRelease message. Alternatively, the UE may be configured to, and/or implemented to, determine the size(s) of the offset(s) based on its capabilities.

If the UE is not configured with the capability to support gap-less MsgA transmission, during cell selection and reselection procedure, the UE selects a suitable cell to camp on not only considering the ordinary measurements in terms of DL radio quality, but also considering if the cell supports gap-less MsgA transmission. The UE selects the cell providing strongest DL radio connection (e.g., in terms of RSRP or RSRQ) and that does not require support of gap-less MsgA transmission.

Similarly, as described above, a UE may also employ an "integrated" cell (re)selection strategy, where the cell's gapless/non-gapless MsgA resource configuration and the cell's channel quality are consider in a weighted combination, e.g. adding an offset to a measured channel quality depending on the cell's MsgA resource configuration (in terms of gapless configurations, non-gapless configurations and mixture of gapless and non-gapless configurations).

As another embodiment, the UE selects an RO and a corresponding PO depending on whether it supports gap-less msgA transmission or not. In this case if the UE supports gap-less msgA transmission:
- The UE is either free to select any RO/PO irrespective of if this will give a gap-less msgA transmission or
- The UE must select a RO/PO giving a gap-less msgA transmission.

The alternative of selecting any RO/PO for UEs that support gap-less transmission may have the benefit that all available resources can be used by gap-less UEs, which maximizes their usage when UEs accessing the cell tend to have gap-less capability. The alternative of selecting only gap-less ROs may have the benefit of ensuring that POs used in gap-less transmission are used as much as possible, which could be when a relatively small number of UEs accessing a cell have gap-less capability.

In case the UE does not support gap-less msgA transmission, the UE may only select cells which do not support gap-less msgA transmission. Or, the UE may also select cells which support both gap-less msgA transmission and msgA transmission with gap. In this latter case, the UE may only select ROs/POs giving msgA transmission with gap between PRACH and msgA PUSCH, or select any RO/PO and only transmit preamble in case the select RO/PO gives a msgA transmission without gap. In case only the preamble is transmitted, the network can respond with a fallback RAR.

For a UE not supporting gap-less transmission, a benefit of selecting only cells that do not support gap-less transmission is that these less capable UEs will not add to the cell load of cells serving both UEs with gap-less and without gap-less capability. The alternative of UEs without gap-less capability accessing cells serving both types of UEs has the benefit that UEs without gap-less capability will generally be able to find better serving cells, since more choices of cells will be available to them.

The UE may also select a cell which only supports gap-less msgA transmission. In this case the UE only transmit preamble and the network responds with a fallback RAR, or the UE does a 4-step RA if this is supported in the cell.

UEs not supporting gap-less transmission transmitting only preambles has the benefit of reducing load on the POs and enabling a UE without gap-less support to access a cell, but will make less efficient use of 2-step RACH operation, since the information carried on the POs must be conveyed through the fallback procedure.

### Autonomous selection of Preamble - PUSCH occasion (or PUSCH resource unit) pairs based on delay

The physical characteristics or settings of different physical signals or channels that a UE transmits may be different. For example, the transmitted power, occupied PRBs, and antennas that the UE transmits on all can vary. Therefore, when a UE transmits different physical channels such as a PRACH and a PUSCH in adjacent slots, it may need some time for its hardware to adapt, its transmitted power level to settle, or its transmit chains to switch among antennas. Therefore, NR specifications sometimes restrict the minimum delay with which the UE is permitted to transmit different physical channel types that adjacent in time, such as the PUSCH and PRACH. Since lower delays between different physical channel types can lead to greater complexity, UE capabilities may be defined according to the minimum delay the UE can support.

LBT procedures also impose delay requirements between transmissions of a UE, as discussed above. Depending on the LBT category, the UE must determine if the channel is occupied prior to transmitting if the delay from a prior transmission is greater than some amount. If the delay is small enough, the UE can transmit without sensing the channel, but otherwise must first sense the channel.

It can be seen that a UE supporting shared channel access with LBT must support conflicting requirements when operating an LBT procedure: it must take into account any minimum delay requirements imposed by the need for the UE's hardware to adapt while still meeting the maximum delay requirement for transmission without a LBT procedure or using a shortened LBT procedure. A further complicating factor is that the network is heretofore not aware of whether the UE is capable of supporting a minimum delay between PRACH and PUSCH prior to initial access, and therefore the UE may need to autonomously select which RO-PO combinations meet both its minimum hardware imposed delay and LBT maximum delay (i.e. the maximum gap between RO and PO allowed for MsgA PUSCH transmission without a preceding LBT procedure). Therefore, an embodiment is needed wherein the UE determines if an RO-PO combination meets a delay requirement imposed by its hardware capability and a second delay requirement in an LBT procedure, wherein the network provides RO and PO configurations that may or may not meet the UE's delay requirements.

In some embodiments of a random access procedure, the UE receives a first and a second configuration identifying an RO and a PO, respectively. The UE then receives a first and a second configuration identifying a random access preamble occasion (`RO') and a PUSCH transmission occasion (`PO'), respectively. The UE determines a delay between the end of a random access preamble transmission in the RO and the start of the PO from the first and second configurations. When the delay is not more than a first predetermined value, the UE transmits a random access preamble in its RO. The UE is identified as supporting transmission of the random access preamble followed by a PUSCH at a delay not more than the first predetermined value, but the UE may not necessarily indicate to the network that it supports this RO-PO delay prior to the random access procedure. When the delay is not less than a second value, the UE determines if a slot is idle and transmits the PUSCH in its PO if the slot is idle. When the delay is less than the second value, the UE transmits the PUSCH in its PO.

Two-step RACH procedures may require the UE to use RACH preambles specifically designated for use in the two-step procedure when the RSRP of an SSB (or CSI-RS) associated with the RACH preambles is greater than a threshold. This use of different RACH preambles for 2-step and 4-step RACH is in order to differentiate the UEs, since the network has no other indication of which procedure a UE uses for random access. If there is no RO-PO combination that meets the UEs minimum delay capability, then the UE will not be able to access a cell using 2-step RACH resources. One way to solve this problem is to allow the UE to select another cell when no RO-PO combination can be found that meets the UE's minimum delay capability. An alternative solution is to make an exception to the constraint that the UE must use 2-step random access resources when it has selected the two step procedure, where when the UE does not find an RO-PO combination that meets its delay requirements, it instead follows the 4-step random access procedure, transmitting a RACH preamble that is used for 4 step operation. This alternative solution has the benefit that the UE can still access a cell that it is near to (i.e. that has a relatively large RSRP), rather than being forced to select another cell for two step operation that meets its RO-PO delay requirements.

Therefore, in some embodiments of a random access procedure, a UE receives a first and a second configuration identifying a random access preamble occasion (`RO') and a PUSCH transmission occasion (`PO'), respectively. The UE determines a delay between the end of a random access preamble transmission in the RO and the start of the PO from the first and second configurations. When the delay is not more than a first predetermined value, the UE transmits a random access preamble in its RO and a PUSCH in its PO. When the delay is more than the first predetermined value, the UE transmits a second random access preamble not associated with a PUSCH.

Two-step random access allows low latency random access procedures, and so in scenarios where low latency is desirable, a network may choose to configure its random access resources primarily for two step operation. In these scenarios, there may be little or no 4-step RACH resource available, and when a UE is not able to find RO-PO combinations that meet its delay requirements, it may also not be able to use 4-step RACH procedures. A solution to this problem can be to instead allow the UE to transmit a RACH preamble associated with 2-step operation without transmitting a msgA PUSCH. Since the network will not generally know the delay capability of UEs, it will not be able to infer if the configuration it provides meets the UE's delay requirements, and so will not generally know if the UE actually transmits a msgA PUSCH. If the network does not know, and it does not want to use 4-step access, it might allow the UE to repeatedly transmit in the two step RACH procedure, and continue to attempt to decode msgA PUSCHs that are not actually transmitted, wasting resources and delaying the UE's access to the cell. The network may thus, as one alternative, indicate fallback to 4-step RA operation by transmitting a fallbackRAR to the UE when it receives a 2-step RA preamble without receiving an associated MsgA PUSCH transmission. Another alternative is to attempt to perform energy detection on the msgA PUSCH DMRS and/or the msgA PUSCH resource elements that carry UL-SCH in order to estimate if the msgA PUSCH was actually transmitted. If the gNB determines that a preamble is transmitted without a PUSCH, then the network can choose to indicate a fallback to 4-step operation (i.e. transmit a fallbackRAR to the UE). In this way, those UEs that do not transmit a PUSCH because the PO is too close to the RO can be directed to 4-step operation, while UEs that transmitted a PUSCH that was not received by the network can still continue to use 2-step operation. The network can also indicate fallback.

Therefore, in some embodiments of a random access procedure, a UE receives a first and a second configuration identifying a random access preamble occasion (`RO') and a PUSCH transmission occasion (`PO'), respectively. The UE determines a delay between the end of a random access preamble transmission in the RO and the start of the PO from the first and second configurations. When the delay is not more than a first predetermined value, the UE transmits a random access preamble in its RO and a PUSCH in its PO. When the delay is more than the first predetermined value, the UE transmits the random access preamble.

### On applying the gap requirement between MsgA preamble part and MsgA PUSCH part for RA type selection in CFRA or CBRA

In NR release 16, the RA type selection between 2-step RA and 4-step RA is determined according to following procedures.

For CFRA, only one of the RA types is supported at the same time and whether 2-step RA or 4-step RA can be selected depends on what RA type the CFRA resource is configured for. The UE may also select CBRA resources when the configured CFRA resources do not meet associaetd channel quality requirements.

For CBRA, if both 2-step RACH and 4-step RACH are configured, *msgA-RSRP-Threshold.or msgA-RSRP-ThresholdSUL* is used for selection of RA type for the cases without SUL configured or with SUL configured respectively. 2-step RACH only random access procedures can also be supported in CBRA.

Taking into account the gap requirements for UEs with different capabilities in the RA type selection and in the RA resource allocation, embodiments herein include the following:
Embodiment 1: For CFRA, when the UE capability is known (e.g. when UE is in RRC connected mode) by the network, the network determines the RA type via configuring the corresponding CFRA resources in the dedicated signaling for the RA type based on the UE capability of handle gapless MsgA.

E.g. if UE is capable of handling gapless MsgA, network can configure CFRA resource for 2-step RA type, otherwise configure CFRA resource for 4-step RA type.

In a variant of embodiment 1, the network configures a CFRA resource for 2-step RA type and configures a proper slot offset value between an RO or a set of ROs in one PRACH slot and a PO according to the UE capabilities of handling the MsgAs with different gaps between MsgA preamble part and MsgA PUSCH part.

As an example, for a UE capable of transmitting gapless MsgA, the network can, in the dedicated signaling, schedule an PO right after a RO (e.g. the last RO of one PRACH slot) and also enable CP extension if needed so that single LBT or less LBT time is needed for the whole MsgA transmission.

Embodiment 2: for CBRA, how to determine a gap between preamble or PUSCH depends on whether both RA types are configured.

In one variant of embodiment 2, when only 2-step RA type is configured, a UE determines a MsgA resource with one or more of the following methods. The UE selects the PRACH resources according the SSB selection and determines a PO with some DMRS configuration according to the existing procedures defined in TS 38.213 v16.0.0. When the PO is too close to the RO that the UE can not handle, The PUSCH is discarded, or the whole MsgA is discarded, or the UE selects another SSB. If the PUSCH is discarded, the UE does the preamble only MsgA transmission. In this case, network can either do fallback when MsgA PUSCH is not decoded or do nothing to let the MsgB window expire and UE may do a reattempt so that a MsgA resource meeting the gap requirement can be selected afterwards. On the other hand, if the whole MsgA is discarded, the UE will wait for the next time instance for RO and preamble selection. Or, if the UE selects another SSB, the UE selects an SSB with SS-RSRP above *rsrp-ThresholdSSB* or the CSI-RS with CSI-RSRP above *rsrp-ThresholdCSI-RS,* so that a proper MsgA resource with a proper gap between preamble and PUSCH can be determined

In another variant of embodiment 2, when both 2-step RA and 4-step RA types are configured, besides the methods mentioned in previous variant of embodiment2, UE selects a 4-step RA type when gapless MsgA or a MsgA with small gap between preamble/PUSCH part is not able to be handled as discussed above.

This method introduces new rules for RA type selection. As an example, the following updated RA type selection procedure can be applied (revised from 3GPP TS 38.321):
....
1> 1> if random access procedure is initiated by PDCCH order and if the *ra-PreambleIndex* explicitly provided by PDCCH is not 0b000000 or
1> 1> if the Random Access procedure was initiated for SI request (as specified in TS 38.331 [5]) and the Random Access Resources for SI request have been explicitly provided by RRC or
1> 1> if the Random Access procedure was initiated for beam failure recovery (as specified in clause 5.17) and if the contention-free Random Access Resources for beam failure recovery request for 4-step RA type have been explicitly provided by RRC for the BWP selected for random access procedure; or
1> 1> if the Random Access procedure was initiated for reconfiguration with sync and if the contention-free Random Access Resources for 4-step RA type have been explicitly provided in *rach-ConfigDedicated* for the BWP selected for random access:
   2> set the *RA_TYPE* to *4-stepRA;*
1> 1> else if the BWP selected for random access procedure is configured with both 2-step and 4-step RA type random access resources and if the MsgA resource determined by UE has a gap no less than the minimum requirement according to the UE's capability and the RSRP of the downlink pathloss reference is above *RSRP_THRESHOLD_RA_TYPE_SELECTION;* or
1> 1> if the BWP selected for random access procedure is only configured with 2-step RA type random access resources (i.e. no 4-step RACH RA type resources configured) or
1> 1> if the Random Access procedure was initiated for reconfiguration with sync and if the contention-free Random Access Resources for 2-step RA type have been explicitly provided in *rach-ConfigDedicated* for the BWP selected for random access: 2> set the *RA_TYPE* to *2-pRA;*
1> 1> else:
   2> set the RA_TYPE to *4-pRA;*
1> 1> perform initialization of variables specific to random access type as specified in sub-clause 5.1.1a;
....

### Some further aspects of UE behavior when the UE does not support gapless MsgA transmission

A scenario which may deserve some attention is where a UE does not support gapless MsgA transmission and is faced with different situations in terms of the available RA configurations in a cell.

If the cell is configured with both gapless and non-gapless RO-PO combinations for 2-step RA, the UE should attempt to select an RO-PO which is configured with a gap (where the gap should be large enough to meet the UE's capability).

If this is not possible, e.g. because only gapless RO-PO combinations are configured for 2-step RA in the cell, the UE will not be able to transmit a complete MsgA (i.e. a preamble with an associated MsgA PUSCH transmission) and has to find another approach.

To this end, in consideration of the RA configuration in the cell (including e.g. presence of only gapless RO-PO combinations, presence of only non-gapless RO-PO combinations or presence of both gapless and non-gapless RO-PO combinations), a UE which supports 2-step RA, but does not support gapless MsgA transmission, may apply e.g. one of the following alternative strategies in accordance with different embodiments:
1. The UE selects 4-step RA and if no 4-step RA configuration exists in the cell, the UE regards the cell as inaccessible.
2. The UE selects 4-step RA and if no 4-step RA configuration exists in the cell, the UE selects a 2-step PRACH occasion and transmits a preamble but skips the MsgA PUSCH transmission, which will result in fallback to 4-step RA.
3. The UE selects the first available PRACH occasion, irrespective of whether it is a 4-step RO or a 2-step RO. If it is a 2-step RO, the result will be fallback to 4-step RA, since the UE will skip the MsgA PUSCH transmission.
4. The UE selects a 2-step RO-PO combination, e.g. the first available 2-step RO, and the result will be fallback to 4-step RA, since the UE will skip the MsgA PUSCH transmission.

As another option, more than one of the above strategies may be specified or available for a UE and the network may configure the UE with which strategy to use (or the UE may autonomously choose which strategy to apply).

The following illustrates how the above strategies could be supported in in the RA type selection procedure description in the MAC specification 3GPP TS 38.321, based on the text in sections 5.1.1 in the current version of the specification (in the form of a not yet stable and approved change request), which is version 15.8.0.
1> else if the BWP selected for random access procedure is configured with both 2-step and 4-step RA type random access resources and the RSRP of the downlink pathloss reference is above *RSRP_THRESHOLD_RA*_*TYPE_SELECTION* and at least one RO-PO combination configured in the BWP has a gap larger than <someParameterIndicatingTheUEsMinimumGapCapability>; or
   1> if the BWP selected for random access procedure is only configured with 2-step RA type random access resources (i.e. no 4-step RACH RA type resources configured); or
      *Note: This condition together with the level 2 statement below (i.e. "set the RA_TYPE to 2-stepRA') covers (like an umbrella) strategy 2. It would have to be complemented with modified logic in the procedures for selecting RA resource and transmitting in the resource,* so *that the length of the gap in relation to the UE capability is taken into account such that the UE first attempts to select a RO-PO combination where the gap is large enough and, if no such RO-PO combination is available, transmits only a 2-step RA preamble. For strategy 1 to work, this logic would have to be rewritten to avoid that the RA_TYPE is set to 2-stepRA when the gap is too short and that the UE in that* case *instead should regard the cell*/*BWP* as *inaccessible*/*barred.*
   1> if the Random Access procedure was initiated for reconfiguration with sync and if the contention-free Random Access Resources for 2-step RA type have been explicitly provided in *rach-ConfigDedicated* for the BWP selected for random access:
      2> set the *RA_TYPE* to *2-stepRA;*
   1> else if the BWP selected for random access procedure is configured with both 2-step and 4-step RA type random access resources and the RSRP of the downlink pathloss reference is above *RSRP_THRESHOLD_RA*_*TYPE_*SELECTION and none of the RO-PO combinations configured in the BWP has a gap larger than
      <someParameterIndicatingTheUEsMinimumGapCapability>:
      From this point, the logic differs between strategies 1 - 4:
      ------ Strategy 1 (assuming some logic rewriting according to the note above) ------
      2> set the *RA_TYPE* to *4-stepRA;*
   1> else if the BWP selected for random access procedure is configured with only 2-step RA type random access resources (i.e. no 4-step RA configured in the BWP) and the RSRP of the downlink pathloss reference is abovebelow *RSRP_THRESHOLD_RA_TYPE_SELECTION* or none of the RO-PO combinations configured in the BWP has a gap larger than
      <someParameterIndicatingTheUEsMinimumGapCapability>:
      2> consider the cell as inaccessible (no BWP switch considered since not since I assume that the network will ensure that the situation will not occur for a UE in RRC_CONNECTED state... hmm... well it could if the RA type selection threshold is not exceeded, but that is not really relevant for the invention...).
         ------ Strategy 2 (This is essentially already covered above, as described in the note above, but otherwise logic along the following lines could cover it) ------
      2> set the *RA_TYPE* to *4-stepRA;*
   1> else if the BWP selected for random access procedure is configured with only 2-step RA type random access resources (i.e. no 4-step RA configured in the BWP) (regardless of the RSRP and regardless of the gaps of the RO-PO combinations configured in the BWP):
      2> set the *RA_TYPE* to *2-stepRA;* (Possibly, the UE should instead regard the cell as inaccessible if the RA type RSRP selection threshold is not exceeded? I haven't checked how this is specified today in the CR.)
         ------ Strategy 3 ------
      2> if the first available PRACH occasion is configured for the 2-step RA type, set the *RA_TYPE* to *2-stepRA;* (Here I guess "available" should depend on the selected SSB. And note that this would have to be complemented with modified logic in the procedures for selecting RA resource and transmitting in the resource, so that the length of the gap in relation to the UE capability is taken into account such that the UE first attempts to select a RO-PO combination where the gap is large enough and, if no such RO-PO combination is available, transmits only a 2-step RA preamble.)
      2> else set the *RA_TYPE* to *4-stepRA;* (Note that the case where 4-step RA is not configured for the BWP is already covered further above.)
         ------ Strategy 4 ------
      2> set the *RA_TYPE* to *2-stepRA;* (Note that this would have to be complemented with modified logic in the procedures for selecting RA resource and transmitting in the resource, so that the length of the gap in relation to the UE capability is taken into account such that the UE first attempts to select a RO-PO combination where the gap is large enough and, if no such RO-PO combination is available, transmits only a 2-step RA preamble.)

Note that the above described embodiments typically refer to the RA configuration of a cell. However, embodiments herein are equally applicable when the cell is replaced by a BWP in this context. That is, the various aspects related to RA configurations may be related to the RA configurations of a BWP rather than a cell.

Moreover, in some of the embodiments previously described herein, the UE is assumed to signal its capability in relation to gapless MsgA transmission to the UE (i.e. whether it is capable of gapless MsgA transmission), but most of the embodiments are applicable irrespective of whether the UE's support or no support for gapless MsgA transmission is signaled to the network. For example, such embodiments include embodiments describing a UE's behavior depending on the combination of UE gapless MsgA transmission capability (supporting it or not) and the network's MsgA resource configuration (only MsgA resources without gap, only MsgA resources with gap or both MsgA resources without gap and MsgA resources with gap).

## Claims

1. A method performed by a wireless device (40), the method comprising:
determining (600) that no resources configured for random access on a link support a minimum gap requirement of the wireless device (40), wherein the minimum gap requirement is a capability of the wireless device (40) for supporting a minimum gap in time between an end of a transmission of a random access preamble (16) and a start of a transmission of a payload (18) on a Physical Uplink Shared Channel, PUSCH, and wherein the link is deployed on an unlicensed frequency carrier; and
based on said determining (600):
transmitting (610) a random access preamble (16) using the resources configured for random access on the link, but waiting to transmit a payload (18) until the wireless device (40) receives a random access response in response to the random access preamble (16); or
delaying (620) random access on the link until resources configured for random access on the link support the minimum gap requirement of the wireless device (40); or
selecting (620) to perform random access on a different link.

2. The method of claim 1, wherein said transmitting, delaying, or selecting comprises transmitting a random access preamble (16) using the resources configured for random access on the link, but waiting to transmit a payload (18) until the wireless device (40) receives a random access response in response to the random access preamble (16).

3. The method of claim 2, wherein waiting to transmit a payload (18) until the wireless device (40) receives a random access response in response to the random access preamble (16) comprises discarding a payload (18) prepared for transmission as part of a 2-step random access procedure.

4. The method of any of claims 2-3, wherein said determining (600) comprises determining that no resources configured for random access on the link support a minimum gap requirement needed for the wireless device (40) to perform a 2-step random access procedure, and wherein said transmitting comprises transmitting, based on said determining, a 4-step random access preamble (16).

5. The method of any of claims 2-3, wherein the transmitted random access preamble (16) is a 2-step random access preamble (16) and the random access response is a fallback random access response.

6. The method of claim 5, further comprising:
selecting to perform a 4-step random access procedure for random access on the link;
after selecting to perform the 4-step random access procedure, determining that no resources are configured on the link for a 4-step random access procedure;
selecting to transmit a 2-step random access preamble (16) based on said determining that no resources are configured on the link for a 4-step random access procedure; and
after selecting to transmit a 2-step random access preamble (16), determining whether resources configured for random access on the link support the minimum gap requirement of the wireless device (40).

7. The method of any of claims 2-3, further comprising selecting a random access preamble resource in which to transmit a random access preamble (16), irrespective of whether the random access preamble resource is configured for a 2-step random access preamble (16) or a 4-step random access preamble (16), wherein said determining is performed after selecting a random access preamble resource configured for a 2-step random access preamble (16).

8. The method of any of claims 2-3, further comprising selecting a random access preamble resource configured for a 2-step random access preamble (16), wherein said determining is performed after said selecting.

9. The method of any of any of claims 1-8, wherein said determining (600) that no resources configured for random access on the link support the minimum gap requirement of the wireless device (40) comprises, for each combination of a random access preamble resource and a payload resource configured for random access on the link, determining that a gap in time between an end of the random access preamble resource and a start of the payload resource is less than the minimum gap requirement of the wireless device (40).

10. The method of claim 1 or 9, wherein said transmitting, delaying, or selecting comprises said delaying or said selecting.

11. A wireless device (40) configured to:
determine that no resources configured for random access on a link support a minimum gap requirement of the wireless device (40), wherein the minimum gap requirement is a capability of the wireless device (40) for supporting a minimum gap in time between an end of a transmission of a random access preamble (16) and a start of a transmission of a payload (18) on a Physical Uplink Shared Channel, PUSCH, and wherein the link is deployed on an unlicensed frequency carrier; and
based on determining that no resources configured for random access on the link support the minimum gap requirement of the wireless device (40):
transmit a random access preamble (16) using the resources configured for random access on the link, but waiting to transmit a payload (18) until the wireless device (40) receives a random access response in response to the random access preamble (16); or
delay random access on the link until resources configured for random access on the link support the minimum gap requirement of the wireless device (40); or
select to perform random access on a different link.

12. The wireless device (40) of claim 11, configured to perform the method of any of claims 2-10.

13. A computer program comprising instructions which, when executed by at least one processor of a wireless device (40), causes the wireless device (40) to perform the method of any of claims 1-10.

14. A carrier containing the computer program of claim 13, wherein the carrier is one of an electronic signal, optical signal, radio signal, or computer readable storage medium.

## Patentansprüche

1. Verfahren, das von einer drahtlosen Vorrichtung (40) durchgeführt wird, wobei das Verfahren umfasst:
Bestimmen (600), das keine für Direktzugriff auf einer Verbindung konfigurierte Ressource eine Mindestlückenanforderung der drahtlosen Vorrichtung (40) unterstützt, wobei die Mindestlückenanforderung eine Fähigkeit der drahtlosen Vorrichtung (40) zum Unterstützen einer zeitlichen Mindestlücke zwischen einem Ende einer Übertragung einer Direktzugriffspräambel (16) und einem Anfang einer Übertragung einer Nutzlast (18) auf einem gemeinsamen physikalischen Uplink-Kanal, PUSCH, ist, und wobei die Verbindung auf einem unlizenzierten Frequenzträger bereitgestellt wird; und
basierend auf dem Bestimmen (600):
Senden (610) einer Direktzugriffspräambel (16) unter Verwendung der für Direktzugriff auf der Verbindung konfigurierten Ressourcen, aber Warten mit dem Senden einer Nutzlast (18), bis die drahtlose Vorrichtung (40) eine Direktzugriffsantwort in Reaktion auf die Direktzugriffspräambel (16) empfängt; oder
Verzögern (620) von Direktzugriff auf der Verbindung, bis für Direktzugriff auf der Verbindung konfigurierte Ressourcen die Mindestlückenanforderung der drahtlosen Vorrichtung (40) unterstützen; oder
Auswählen (620), Direktzugriff auf einer anderen Verbindung durchzuführen.

2. Verfahren nach Anspruch 1, wobei das Senden, Verzögern oder Auswählen ein Senden einer Direktzugriffspräambel (16) unter Verwendung der für Direktzugriff auf der Verbindung konfigurierten Ressourcen, aber Warten mit dem Senden einer Nutzlast (18) umfasst, bis die drahtlose Vorrichtung (40) eine Direktzugriffsantwort in Reaktion auf die Direktzugriffspräambel (16) empfängt.

3. Verfahren nach Anspruch 2, wobei das Warten mit dem Senden einer Nutzlast (18), bis die drahtlose Vorrichtung (40) eine Direktzugriffsantwort in Reaktion auf die Direktzugriffspräambel (16) empfängt, ein Verwerfen einer Nutzlast (18) umfasst, die zur Übertragung als Teil einer 2-stufigen Direktzugriffsprozedur bereit war.

4. Verfahren nach einem der Ansprüche 2 bis 3, wobei das Bestimmen (600) ein Bestimmen umfasst, dass keine für Direktzugriff auf der Verbindung konfigurierte Ressource eine Mindestlückenanforderung unterstützt, die für die drahtlose Vorrichtung (40) zum Durchführen einer 2-stufigen Direktzugriffsprozedur nötig ist, und wobei das Senden ein Senden einer 4-stufigen Direktzugriffspräambel (16) basierend auf dem Bestimmen umfasst.

5. Verfahren nach einem der Ansprüche 2 bis 3, wobei die gesendete Direktzugriffspräambel (16) eine 2-stufige Direktzugriffspräambel (16) ist und die Direktzugriffsantwort eine Fallback-Direktzugriffsantwort ist.

6. Verfahren nach Anspruch 5, ferner umfassend:
Auswählen, eine 4-stufige Direktzugriffsprozedur für Direktzugriff auf der Verbindung durchzuführen;
Bestimmen, dass keine Ressource auf der Verbindung für eine 4-stufige Direktzugriffsprozedur konfiguriert ist, nach dem Auswählen, die 4-stufige Direktzugriffsprozedur durchzuführen;
Auswählen, eine 2-stufige Direktzugriffspräambel (16) zu senden, basierend auf dem Bestimmen, dass keine Ressource auf der Verbindung für eine 4-stufige Direktzugriffsprozedur konfiguriert ist; und
Bestimmen, ob für Direktzugriff auf der Verbindung konfigurierte Ressourcen die Mindestlückenanforderung der drahtlosen Vorrichtung (40) unterstützen, nach dem Auswählen, eine 2-stufige Direktzugriffspräambel (16) zu senden.

7. Verfahren nach einem der Ansprüche 2 bis 3, ferner umfassend ein Auswählen einer Direktzugriffspräambelressource, in welcher eine Direktzugriffspräambel (16) gesendet werden soll, ungeachtet dessen. ob die Direktzugriffspräambelressource für eine 2-stufige Direktzugriffspräambel (16) oder eine 4-stufige Direktzugriffspräambel (16) konfiguriert ist, wobei das Bestimmen nach dem Auswählen einer für eine 2-stufige Direktzugriffspräambel (16) konfigurierten Direktzugriffspräambelressource durchgeführt wird.

8. Verfahren nach einem der Ansprüche 2 bis 3, ferner umfassend ein Auswählen einer Direktzugriffspräambelressource, die für eine 2-stufige Direktzugriffspräambel (16) konfiguriert ist, wobei das Bestimmen nach dem Auswählen durchgeführt wird.

9. Verfahren nach einem der Ansprüche 1 bis 8, wobei das Bestimmen (600), dass keine für Direktzugriff auf der Verbindung konfigurierte Ressource die Mindestlückenanforderung der drahtlosen Vorrichtung (40) unterstützt, für jede Kombination einer Direktzugriffspräambelressource und einer Nutzlastressource, die für Direktzugriff auf der Verbindung konfiguriert sind, ein Bestimmen umfasst, dass eine zeitliche Lücke zwischen einem Ende der Direktzugriffspräambelressource und einem Anfang der Nutzlastressource kleiner als die Mindestlückenanforderung der drahtlosen Vorrichtung (40) ist.

10. Verfahren nach Anspruch 1 oder 9, wobei das Senden, Verzögern oder Auswählen das Verzögern oder das Auswählen umfasst.

11. Drahtlose Vorrichtung (40), konfiguriert zum:
Bestimmen, das keine für Direktzugriff auf einer Verbindung konfigurierte Ressource eine Mindestlückenanforderung der drahtlosen Vorrichtung (40) unterstützt, wobei die Mindestlückenanforderung eine Fähigkeit der drahtlosen Vorrichtung (40) zum Unterstützen einer zeitlichen Mindestlücke zwischen einem Ende einer Übertragung einer Direktzugriffspräambel (16) und einem Anfang einer Übertragung einer Nutzlast (18) auf einem gemeinsamen physikalischen Uplink-Kanal, PUSCH, ist, und wobei die Verbindung auf einem unlizenzierten Frequenzträger bereitgestellt wird; und
basierend auf dem Bestimmen, dass keine für Direktzugriff auf der Verbindung konfigurierte Ressourcen die Mindestlückenanforderung der drahtlosen Vorrichtung (40) unterstützt:
Senden einer Direktzugriffspräambel (16) unter Verwendung der für Direktzugriff auf der Verbindung konfigurierten Ressourcen, aber Warten mit dem Senden einer Nutzlast (18), bis die drahtlose Vorrichtung (40) eine Direktzugriffsantwort in Reaktion auf die Direktzugriffspräambel (16) empfängt; oder
Verzögern von Direktzugriff auf der Verbindung, bis für Direktzugriff auf der Verbindung konfigurierte Ressourcen die Mindestlückenanforderung der drahtlosen Vorrichtung (40) unterstützen; oder
Auswählen, Direktzugriff auf einer anderen Verbindung durchzuführen.

12. Drahtlose Vorrichtung (40) nach Anspruch 11, die zum Durchführen des Verfahrens nach einem der Ansprüche 2 bis 10 konfiguriert ist.

13. Computerprogramm, umfassend Anweisungen, die bei Ausführung durch mindestens einen Prozessor einer drahtlosen Vorrichtung (40) die drahtlose Vorrichtung (40) zum Durchführen des Verfahrens nach einem der Ansprüche 1 bis 10 veranlassen.

14. Datenträger, der das Computerprogramm nach Anspruch 13 enthält, wobei der Datenträger eines von einem elektronischen Signal, einem optischen Signal, einem Funksignal oder einem computerlesbaren Speichermedium ist.

## Revendications

1. Procédé réalisé par un dispositif sans fil (40), le procédé comprenant :
la détermination (600) qu'aucune ressource configurée pour un accès aléatoire sur une liaison ne prend en charge une exigence d'écart minimal du dispositif sans fil (40), dans lequel l'exigence d'écart minimal est une capacité du dispositif sans fil (40) à prendre en charge un écart temporel minimal entre une fin d'une transmission d'un préambule d'accès aléatoire (16) et un début d'une transmission d'une charge utile (18) sur un canal partagé de liaison montante physique, PUSCH, et dans lequel la liaison est déployée sur une porteuse de fréquence sans licence ; et
sur la base de ladite détermination (600) :
la transmission (610) d'un préambule d'accès aléatoire (16) en utilisant les ressources configurées pour un accès aléatoire sur la liaison, mais l'attente pour transmettre une charge utile (18) que le dispositif sans fil (40) reçoive une réponse d'accès aléatoire en réponse au préambule d'accès aléatoire (16) ; ou
le retard (620) d'un accès aléatoire sur la liaison jusqu'à ce que des ressources configurées pour un accès aléatoire sur la liaison prennent en charge l'exigence d'écart minimal du dispositif sans fil (40) ; ou
la sélection (620) de réaliser un accès aléatoire sur une liaison différente.

2. Procédé selon la revendication 1, dans lequel ladite transmission, ledit retard ou ladite sélection comprend la transmission d'un préambule d'accès aléatoire (16) en utilisant les ressources configurées pour un accès aléatoire sur la liaison, mais l'attente pour transmettre une charge utile (18) que le dispositif sans fil (40) reçoive une réponse d'accès aléatoire en réponse au préambule d'accès aléatoire (16).

3. Procédé selon la revendication 2, dans lequel l'attente pour transmettre une charge utile (18) que le dispositif sans fil (40) reçoive une réponse d'accès aléatoire en réponse au préambule d'accès aléatoire (16) comprend le rejet d'une charge utile (18) préparée pour une transmission dans le cadre d'une procédure d'accès aléatoire en deux étapes.

4. Procédé selon la revendication 2 ou 3, dans lequel ladite détermination (600) comprend la détermination qu'aucune ressource configurée pour un accès aléatoire sur la liaison ne prend en charge une exigence d'écart minimal nécessaire au dispositif sans fil (40) pour réaliser une procédure d'accès aléatoire en deux étapes, et dans lequel ladite transmission comprend la transmission, sur la base de ladite détermination, d'un préambule d'accès aléatoire en quatre étapes (16).

5. Procédé selon la revendication 2 ou 3, dans lequel le préambule d'accès aléatoire transmis (16) est un préambule d'accès aléatoire en deux étapes (16) et la réponse d'accès aléatoire est une réponse d'accès aléatoire de repli.

6. Procédé selon la revendication 5, comprenant en outre :
la sélection de réaliser une procédure d'accès aléatoire en quatre étapes pour un accès aléatoire sur la liaison ;
après la sélection de réaliser la procédure d'accès aléatoire en quatre étapes, la détermination qu'aucune ressource n'est configurée sur la liaison pour une procédure d'accès aléatoire en quatre étapes ;
la sélection de transmettre un préambule d'accès aléatoire en deux étapes (16) sur la base de ladite détermination qu'aucune ressource n'est configurée sur la liaison pour une procédure d'accès aléatoire en quatre étapes ; et
après la sélection de transmettre un préambule d'accès aléatoire en deux étapes (16), la détermination si des ressources configurées pour un accès aléatoire sur la liaison prennent ou non en charge l'exigence d'écart minimal du dispositif sans fil (40).

7. Procédé selon la revendication 2 ou 3, comprenant en outre la sélection d'une ressource de préambule d'accès aléatoire dans laquelle transmettre un préambule d'accès aléatoire (16), que la ressource de préambule d'accès aléatoire soit configurée pour un préambule d'accès aléatoire en deux étapes (16) ou un préambule d'accès aléatoire en quatre étapes (16), dans lequel ladite détermination est réalisée après la sélection d'une ressource de préambule d'accès aléatoire configurée pour un préambule d'accès aléatoire en deux étapes (16).

8. Procédé selon la revendication 2 ou 3, comprenant en outre la sélection d'une ressource de préambule d'accès aléatoire configurée pour un préambule d'accès aléatoire en deux étapes (16), dans lequel ladite détermination est réalisée après ladite sélection.

9. Procédé selon l'une quelconque des revendications 1 à 8, dans lequel ladite détermination (600) qu'aucune ressource configurée pour un accès aléatoire sur la liaison ne prend en charge l'exigence d'écart minimal du dispositif sans fil (40) comprend, pour chaque combinaison d'une ressource de préambule d'accès aléatoire et d'une ressource de charge utile configurées pour un accès aléatoire sur la liaison, la détermination qu'un écart temporel entre une fin de la ressource de préambule d'accès aléatoire et un début de la ressource de charge utile est inférieur à l'exigence d'écart minimal du dispositif sans fil (40).

10. Procédé selon la revendication 1 ou 9, dans lequel ladite transmission, ledit retard ou ladite sélection comprend ledit retard ou ladite sélection.

11. Dispositif sans fil (40) configuré pour :
déterminer qu'aucune ressource configurée pour un accès aléatoire sur une liaison ne prend en charge une exigence d'écart minimal du dispositif sans fil (40), dans lequel l'exigence d'écart minimal est une capacité du dispositif sans fil (40) à prendre en charge un écart temporel minimal entre une fin d'une transmission d'un préambule d'accès aléatoire (16) et un début d'une transmission d'une charge utile (18) sur un canal partagé de liaison montante physique, PUSCH, et dans lequel la liaison est déployée sur une porteuse de fréquence sans licence ; et
sur la base de ladite détermination qu'aucune ressource configurée pour un accès aléatoire sur la liaison ne prend en charge l'exigence d'écart minimal du dispositif sans fil (40) :
transmettre un préambule d'accès aléatoire (16) en utilisant les ressources configurées pour un accès aléatoire sur la liaison, mais attendre de transmettre une charge utile (18) que le dispositif sans fil (40) reçoive une réponse d'accès aléatoire en réponse au préambule d'accès aléatoire (16) ; ou
retarder un accès aléatoire sur la liaison jusqu'à ce que des ressources configurées pour un accès aléatoire sur la liaison prennent en charge l'exigence d'écart minimal du dispositif sans fil (40) ; ou
sélectionner de réaliser un accès aléatoire sur une liaison différente.

12. Dispositif sans fil (40) selon la revendication 11, configuré pour réaliser le procédé selon l'une quelconque des revendications 2 à 10.

13. Programme informatique comprenant des instructions qui, lorsqu'elles sont exécutées par au moins un processeur d'un dispositif sans fil (40), amènent le dispositif sans fil (40) à réaliser le procédé selon l'une quelconque des revendications 1 à 10.

14. Support contenant le programme informatique selon la revendication 13, dans lequel le support est l'un parmi un signal électronique, un signal optique, un signal radio, et un support de stockage lisible par ordinateur.
